# EUROPÄISCHE PATENTSCHRIFT

(11) **EP 4 263 133 B1**
(45) Veröffentlichungstag und Bekanntmachung des Hinweises auf die Patenterteilung: **18.03.2026**
(21) Anmeldenummer: 21823893.9
(22) Anmeldetag: 07.12.2021
(51) Int. Cl.: B24B 53/075, B23F 1/02, B24D 5/16, B23F 23/06, B24B 41/04, B23B 31/02, B23Q 3/12, B23F 21/02, B23B 31/40

(54) **AUFNAHMEFLANSCH FÜR EINEN WERKZEUGKÖRPER**
RECEIVING FLANGE FOR A TOOL BODY
FLASQUE RÉCEPTEUR DESTINÉ À UN CORPS D'OUTIL

(30) Priorität: 18.12.2020 CH 16252020
(43) Veröffentlichungstag der Anmeldung: 25.10.2023
(73) Patentinhaber: Reishauer AG, 8304 Wallisellen (CH)
(72) Erfinder: HALTER, Adrian Marcel, 8304 Wallisellen (CH); HUG, Theophil, 8360 Wallenwil (CH); MÜLLER, Michel, 8610 Uster (CH)
(74) Vertreter: Detken, Andreas
(86) Internationale Anmeldenummer: PCT/EP2021/084599
(87) Internationale Veröffentlichungsnummer: WO 2022/128631

(56) Entgegenhaltungen:
- EP-A1- 2 712 694
- CH-A1- 711 186
- DE-A1- 2 405 048
- DE-A1- 4 309 321
- US-B1- 6 257 963

## Beschreibung

### TECHNISCHES GEBIET

Die vorliegende Erfindung betrifft einen Aufnahmeflansch für einen Werkzeugkörper, insbesondere für einen Schleifkörper. Die Erfindung betrifft ausserdem ein Bearbeitungswerkzeug, das einen solchen Aufnahmeflansch umfasst, sowie einen damit ausgestatteten Werkzeugkopf.

### STAND DER TECHNIK

Aufnahmeflansche für Schleifscheiben sind in der Norm DIN ISO 666:2013-12 standardisiert. Gemäss dieser Norm wird als "Aufnahmeflansch" (engl. "hub flange") ein System aus einem "festen Flansch" (engl. "fixed flange") und einem "losen Flansch" (engl. "loose flange") zur reibschlüssigen Befestigung von Schleifscheiben auf einer Schleifspindel bezeichnet. Der lose Flansch wird auch als "Gegenflansch" (engl. "counterflange") bezeichnet. Die Einspannkraft für die reibschlüssige Befestigung der Schleifscheibe wird über mehrere auf einem Teilkreis angeordnete Schrauben aufgebracht, die den Gegenflansch in Richtung des festen Flansches drücken. Im festen Flansch ist eine Aufnahme zur reibschlüssigen oder formschlüssigen Verbindung mit der Schleifspindel integriert. Diese Schnittstelle des Aufnahmeflansches zur Schleifspindel wird als "Flanschaufnahme" (engl. "flange socket") bezeichnet. Der damit zusammenwirkende Teil der Schleifspindel, über den die Verbindung zum Aufnahmeflansch hergestellt wird, d.h. die Schnittstelle der Schleifspindel zum Aufnahmeflansch, wird als "Spindelaufnahme" (engl. "spindle socket") bezeichnet.

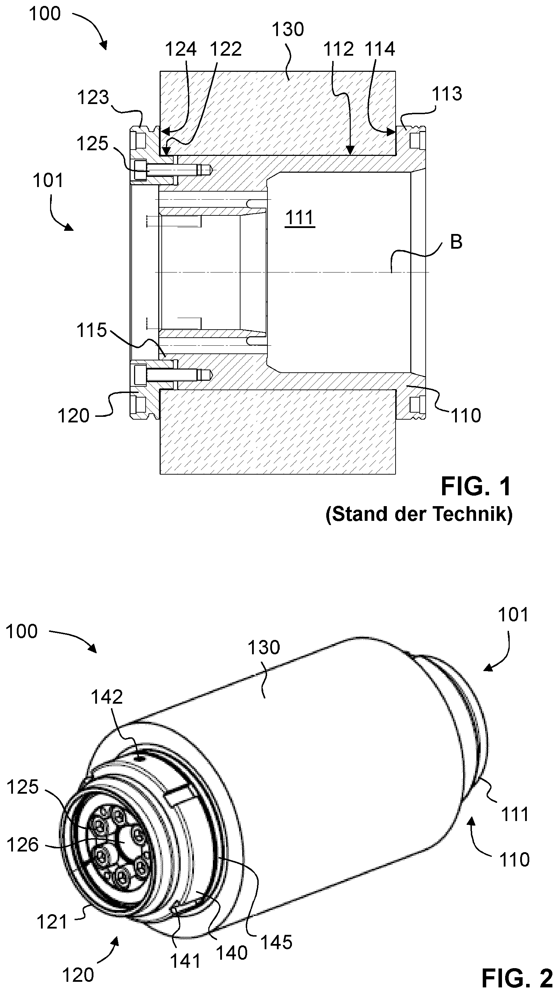

Die Fig. 1 zeigt in einem zentralen Längsschnitt ein Schleifwerkzeug 100, das einen Aufnahmeflansch 101 nach dem Stand der Technik mit einer darin eingespannten Schleifscheibe 130 umfasst. Ein solcher Aufnahmeflansch wird von der Reishauer AG, Wallisellen, Schweiz unter der Bezeichnung "B 160" angeboten.

Der Aufnahmeflansch 101 umfasst einen festen Flansch 110 und einen Gegenflansch 120. Der feste Flansch 110 weist eine Flanschaufnahme 111 zur Verbindung mit einer Schleifspindel auf. Im Betrieb ist die Schleifspindel auf der rechten Seite der Fig. 1 angeordnet. Der feste Flansch 110 weist eine zylindrische Aussenfläche 112 auf, die spindelseitig durch einen Bund 113 begrenzt wird. Am spindelabgewandten Ende weist der feste Flansch 110 einen Verbindungsbereich 115 mit reduziertem Durchmesser und zylindrischer Aussenkontur auf.

Der Gegenflansch 120 ist ringförmig ausgebildet, mit einer zylindrischen inneren Mantelfläche. Er ist mit dieser inneren Mantelfläche auf den zylindrischen Verbindungsbereich 115 des festen Flansches 110 aufgeschoben. Zwischen dem festen Flansch 110 und dem Gegenflansch 120 besteht also eine zylindrische Steckverbindung. Der Gegenflansch 120 weist eine zylindrische äussere Mantelfläche 122 auf, deren Aussendurchmesser dem Aussendurchmesser der zylindrischen äusseren Mantelfläche 112 des festen Flansches entspricht. Die äussere Mantelfläche 122 des Gegenflansches 120 fluchtet mit der äusseren Mantelfläche 112 des festen Flansches 110. Am spindelabgewandten Ende des Gegenflansches 120 ist ein Bund 123 ausgebildet, der die äussere Mantelfläche 122 des Gegenflansches 120 zu diesem Ende hin begrenzt. Der Gegenflansch 120 ist am festen Flansch 110 mit einem Kranz aus Zylinderschrauben 125 fixiert.

Die Schleifscheibe 130 ist mit ihrer zentralen Bohrung auf der äusseren Mantelfläche 112 des festen Flansches 110 und der äusseren Mantelfläche 122 des Gegenflansches 120 aufgenommen. Axial ist die Schleifscheibe 130 zwischen einer ringförmigen ersten Spannfläche 114 am Bund 113 des festen Flansches 110 und einer ringförmigen zweiten Spannfläche 124 am Bund 123 des Gegenflansches 120 eingespannt. Optional können dünne Zwischenscheiben zwischen der Schleifscheibe 130 und den Spannflächen 114 bzw. 124 eingelegt sein. Zur Erzeugung der Einspannkraft dienen die Zylinderschrauben 125, die den Gegenflansch 120 mit dem festen Flansch 110 verbinden. An den Spannflächen 114, 124 besteht dadurch ein Reibschluss zwischen der Schleifscheibe 130 und dem jeweiligen Bund 113, 123, gegebenenfalls vermittelt durch die Zwischenscheiben.

In der Verzahnungsfertigung kommen zunehmend Bearbeitungswerkzeuge mit kleinem Durchmesser zum Einsatz. Um die gewünschte Schnittgeschwindigkeit zu erreichen, werden solche Werkzeuge meist bei relativ hohen Drehzahlen betrieben. Solche Werkzeuge können im Verhältnis zu ihrem Durchmesser relativ lang sein. Dadurch sind die Werkzeuge besonders anfällig für Biege- und Torsionsschwingungen. Ein Aufnahmeflansch nach dem Stand der Technik, wie er in der Fig. 1 dargestellt ist, eignet sich allerdings nicht optimal für ein langes und verhältnismässig dünnes Werkzeug. Dies gilt besonders dann, wenn das Werkzeug an beiden Enden mit Spindelwellen verbunden werden soll. Das Dokument DE4309321 A1 bildet die Grundlage für den Oberbegriff des Anspruchs 1 und offenbart eine Anordnung zur zentrierten und axial fixierten Aufnahme eines rotierenden Körpers, insbesondere einer Schleifscheibe bzw. einer Hochgeschwindigkeits-Schleifscheibe.

### DARSTELLUNG DER ERFINDUNG

Es ist eine Aufgabe der vorliegenden Erfindung, einen Aufnahmeflansch anzugeben, der sich in besonderer Weise zur Aufnahme von Werkzeugkörpern eignet, die im Verhältnis zu ihrer Länge einen relativ kleinen Durchmesser haben.

Diese Aufgabe wird durch einen Aufnahmeflansch nach Anspruch 1 gelöst. Weitere Ausführungsformen sind in den abhängigen Ansprüchen angegeben.

Es wird ein Aufnahmeflansch für einen Werkzeugkörper vorgeschlagen. Der Aufnahmeflansch definiert eine Werkzeugachse. Er weist einen festen Flansch auf, der dazu ausgebildet ist, den Werkzeugkörper aufzunehmen. An dem festen Flansch ist eine erste Flanschaufnahme zur Verbindung mit einer um die Werkzeugachse drehbaren ersten Spindelwelle ausgebildet. Der Aufnahmeflansch weist ausserdem einen Gegenflansch auf, der mit dem festen Flansch lösbar verbunden ist. Der feste Flansch und der Gegenflansch sind über eine Konusverbindung miteinander verbunden, wobei die Konusverbindung koaxial zur Werkzeugachse angeordnet ist und durch einen Innenkonus ("Kegelaufnahme") und einen im Innenkonus aufgenommenen Aussenkonus ("Kegel") gebildet wird.

Im vorliegenden Dokument werden Begriffe entsprechend den oben angegebenen Definitionen der DIN ISO 666:2013-12 verwendet, mit folgenden Ausnahmen: Der Begriff "Aufnahmeflansch" wird auch für Werkzeugträger verwendet, auf denen eine andere Art von Werkzeugkörper als eine Schleifscheibe eingespannt ist. Der Begriff "Gegenflansch" wird breiter als in der DIN ISO 666:2013-12 verstanden. Er umfasst auch Strukturen, die mit dem festen Flansch lösbar zu einer Einheit verbunden sind, ohne dass der Werkzeugkörper direkt zwischen dem festen Flansch und dem Gegenflansch eingespannt ist.

Der Aufnahmeflansch kann, anders als in der DIN ISO 666:2013-12, dazu vorgesehen sein, an beiden Enden mit jeweils einer Spindelwelle verbunden zu werden. Dazu kann der Gegenflansch eine zweite Flanschaufnahme zur Verbindung mit einer zweiten Spindelwelle aufweisen. Da der Gegenflansch vom festen Flansch lösbar ist, um den Werkzeugkörper zu wechseln, kann der Durchmesser der zweiten Flanschaufnahme weitgehend frei gewählt werden und insbesondere bei Bedarf auch grösser als der Innendurchmesser der Bohrung des Werkzeugkörpers sein. Auf diese Weise kann die zweite Flanschaufnahme auch bei Werkzeugen mit kleinem Bohrungsdurchmesser genügend gross ausgestaltet werden, um über diese Flanschaufnahme ein ausreichendes Drehmoment übertragen zu können.

Indem zwischen dem festen Flansch und dem Gegenflansch eine Konusverbindung ausgebildet ist, wird eine präzise zentrierte Verbindung geschaffen, die einerseits spielfrei und andererseits besonders biegesteif ist. Anders als bei einem Aufnahmeflansch des Standes der Technik, wie er in der Fig. 1 dargestellt ist, erfolgt ein Reibschluss zwischen dem festen Flansch und dem Gegenflansch nicht mehr allein über den dazwischen eingespannten Werkzeugkörper, sondern der Reibschluss kann im Bereich der Konusverbindung direkt zwischen dem festen Flansch und dem Gegenflansch erfolgen. Insbesondere wird es möglich, den Aufnahmeflansch so zu gestalten, dass eine Einspannkraft, mit der der Werkzeugkörper am Aufnahmeflansch gehalten ist, weitgehend unabhängig von der Kraft wird, mit dem der feste Flansch und der Gegenflansch an der Konusverbindung axial zusammengepresst werden.

Das hat insbesondere dann Vorteile, wenn das Werkzeug beidseitig mit Spindelwellen verbunden wird und dazu der Aufnahmeflansch axial auf Druck zwischen den beiden Spindelwellen verspannt wird, so dass beidseitig eine axiale Druckkraft auf den Aufnahmeflansch wirkt. Während bei einem Aufnahmeflansch des Standes der Technik, wie er in der Fig. 1 dargestellt ist, eine solche Druckkraft auf den Werkzeugkörper übertragen würde und zu einer Beschädigung des Werkzeugkörpers führen könnte, wird bei der vorliegenden Erfindung die Druckkraft direkt an der Konusverbindung zwischen dem festen Flansch und dem Gegenflansch übertragen und kann so vom Werkzeugkörper entkoppelt werden.

Durch die vorgeschlagene Ausgestaltung können zudem erheblich höhere Drehmomente zwischen dem festen Flansch und dem Gegenflansch übertragen werden, als dies beim Stand der Technik nach Fig. 1 möglich ist. Das hat z.B. dann besondere Vorteile, wenn der Aufnahmeflansch beidseitig angetrieben werden soll. Falls beispielsweise die beiden Antriebe unterschiedliche Drehmomente erzeugen, wird durch die direkte Kopplung zwischen dem festen Flansch und dem Gegenflansch an der Konusverbindung vermieden, dass die Drehmomentdifferenz auf den Werkzeugkörper übertragen wird.

Der Innenkonus der Konusverbindung kann am festen Flansch und der Aussenkonus am Gegenflansch ausgebildet sein. Alternativ kann aber auch der Innenkonus am Gegenflansch und der Aussenkonus am festen Flansch ausgebildet sein. Der halbe Öffnungswinkel der Konusverbindung, d.h. der einfache Kegelwinkel der Konusflächen relativ zur Werkzeugachse, kann z.B. 1° bis 30° betragen, vorzugsweise 2° bis 10°. Die Länge der Konusverbindung kann in einer Projektion auf die Werkzeugachse sehr kurz gewählt werden, sollte aber vorzugsweise mindestens 3 mm betragen.

Erfindungsgemäß handelt es sich bei der Verbindung zwischen dem festen Flansch und dem Gegenflansch um eine Konusverbindung mit axialer Plananlage. Ein wesentlicher Vorteil der Konusverbindung mit axialer Plananlage liegt darin, dass die beiden Teile (fester Flansch und Gegenflansch, einschliesslich der daran ausgebildeten Flanschaufnahmen zur Verbindung mit der jeweiligen Spindelwelle) nicht nur präzise zentriert sind, sondern auch axial präzise zueinander positioniert sind. Dadurch lassen sich diese beiden Teile beim Schleifscheibenwechsel, bei dem die beiden Teile getrennt werden müssen, wieder genauso präzise verbinden. Die Verbindung zwischen Flansch und Gegenflansch hat daher bei der Herstellung des Aufnahmeflansches eine wesentliche qualitätssichernde Aufgabe. Durch die zusätzliche axiale Plananlage kann zudem eine höhere Axialkraft zwischen dem festen Flansch und dem Gegenflansch wirken als bei einer reinen Konusverbindung. Dadurch kann zwischen diesen Elementen ein höheres Drehmoment übertragen werden. Ausserdem kann so die Torsions- und Biegesteifigkeit nochmals verbessert werden.

Für die axiale Plananlage ist an demjenigen Bauteil (fester Flansch oder Gegenflansch), an dem der Innenkonus ausgebildet ist, benachbart zum Innenkonus eine erste axiale Plananlagefläche ausgebildet, und an demjenigen Bauteil, an dem der Aussenkonus ausgebildet ist, ist benachbart zum Aussenkonus eine entgegengesetzt zur ersten Plananlagefläche ausgerichtete zweite axiale Plananlagefläche ausgebildet. Der feste Flansch und der Gegenflansch sind an der ersten und zweiten axialen Plananlagefläche reibschlüssig aneinander gepresst. Es ist dabei von Vorteil, wenn die erste und zweite axiale Plananlagefläche benachbart zum jeweiligen Konus angeordnet sind. Insbesondere ist die erste Plananlagefläche vorzugweise in einem stirnseitig an den Innenkonus angrenzenden und das stirnseitige Ende des Innenkonus radial umgebenden Bereich angeordnet. Entsprechend ist die zweite Plananlagefläche vorzugsweise in einem den Aussenkonus radial umgebenden Bereich angeordnet. Radial zwischen dem stirnseitigen Ende des Innenkonus und der ersten Plananlagefläche kann eine Schwächung in das Material des betreffenden Bauteils (fester Flansch oder Gegenflansch) eingebracht sein, um die radiale Dehnbarkeit des Innenkonus zu erhöhen.

Um den Gegenflansch am festen Flansch zu fixieren, sind vorteilhaft axial ausgerichtete Schrauben vorgesehen. Diese pressen den festen Flansch und den Gegenflansch derart axial aneinander, dass zwischen dem festen Flansch und dem Gegenflansch eine axiale Presskraft wirkt. Die Schrauben sind vorteilhaft gleichmässig um die Werkzeugachse herum verteilt, um Unwucht zu minimieren.

Um den Werkzeugkörper axial im Aufnahmeflansch einzuspannen, definiert der Aufnahmeflansch vorzugsweise eine erste und zweite Spannfläche, die zueinander hin weisen, so dass der Werkzeugkörper zwischen der ersten und zweiten Spannfläche axial auf Druck eingespannt werden kann. Die Spannflächen verlaufen vorzugsweise orthogonal zur Werkzeugachse. Dabei wird der Werkzeugkörper nicht notwendigerweise unmittelbar zwischen der ersten und zweiten Spannfläche eingespannt. Beispielsweise kann zwischen der jeweiligen Spannfläche und dem Werkzeugkörper eine Zwischenscheibe eingelegt werden. Diese kann z.B. aus Aluminium bestehen. Sie kann sehr dünn sein, beispielsweise weniger als 1 mm dick.

Insbesondere kann der Aufnahmeflansch einen Positionierring aufweisen, der relativ zum Gegenflansch eine axial veränderbare Position hat, wobei die erste Spannfläche am festen Flansch ausgebildet ist, und wobei die zweite Spannfläche am Positionierring ausgebildet ist. Dadurch wird es möglich, unterschiedlich breite Werkzeugkörper im Aufnahmeflansch einzuspannen, obwohl die relative Position des festen Flansches und des Gegenflansches durch die Konusverbindung und die Plananlage festgelegt ist.

Um die axiale Position des Positionierrings zu verändern, kann der feste Flansch oder bevorzugt der Gegenflansch ein Aussengewinde aufweisen, und der Positionierring kann ein dazu komplementäres Innengewinde aufweisen. Durch eine Schraubbewegung des Positionierrings kann die axiale Position des Positionierrings eingestellt werden. Am oder im Positionierring können Fixierelemente angebracht sein, z.B. radiale Fixierstifte, die in einer Fixierstellung ein unbeabsichtigtes Verdrehen des Positionierrings verhindern. Axial angrenzend an den Positionierring kann ein Zwischenring angeordnet sein, um eine axiale Einspannkraft vom Positionierring auf den Werkzeugkörper zu übertragen. Der Zwischenring stellt dann eine Gleitfläche für die Spannfläche des Positionierrings zur Verfügung, ohne selbst mitzudrehen. Durch den Zwischenring wird verhindert, dass bei einer Schraubbewegung des Positionierrings direkte Reibung zwischen dem Positionierring und dem Werkzeugkörper auftritt. Um selbst dann eine definierte Spannkraft auf den Werkzeugkörper zu erzeugen, wenn sich die Länge des Werkzeugkörpers z.B. wegen Setzvorgängen ändert, kann der Zwischenring elastische Eigenschaften haben.

In alternativen Ausführungsformen kann der Positionierring gegenüber dem festen Flansch und/oder gegenüber dem Gegenflansch axial verschiebbar sein, und es können Gewindeelemente vorgesehen sein, die in den Gegenflansch oder in den Positionierring eingeschraubt sind, um die axiale Position des Positionierrings relativ zum Gegenflansch zu verändern. Bei den Gewindeelementen kann es sich z.B. um Schrauben handeln, deren axiale Position relativ zum Gegenflansch fixiert ist und die sich unterschiedlich weit in den Positionierring einschrauben oder aus diesem heraus schrauben lassen, um dessen axiale Position zu verändern. Alternativ kann es sich bei den Gewindeelementen um Gewindestifte handeln, die sich im Gegenflansch unterschiedlich weit ein- und ausschrauben lassen und die mit einem distalen Ende eine axiale Druckkraft auf den Positionierring ausüben. Um selbst dann eine definierte Spannkraft auf den Werkzeugkörper zu erzeugen, wenn sich die Länge des Werkzeugkörpers ändert, kann die Schraubverbindung mit einem federnden Element kombiniert werden. Beispielsweise können im Positionierring axial federnde Elemente, z.B. Büchsen mit Tellerfedern, vorgesehen sein, auf die die genannten Gewindestifte axial einen Druck ausüben.

Auch die Verbindung des Aufnahmeflansches zu den Spindelwellen erfolgt vorzugsweise über Konusverbindungen, bevorzugt ebenfalls mit Plananlage. Dies ermöglicht ein sehr präzises Zentrieren des Aufnahmeflansches im Schleifkopf. Beispielsweise kann die Verbindung über eine der in DIN ISO 666:2013-12 genannten Ausführungen A, BF, BM, CF oder CM erfolgen. Dazu kann die erste und/oder zweite Flanschaufnahme als Innen- oder Aussenkonus mit Plananlagefläche ausgebildet sein. Es sind aber auch alternative Arten der Verbindung zwischen dem Aufnahmeflansch und den Spindelwellen denkbar, z.B. über radial wirkende Hydrodehnelemente.

Dabei ist es von Vorteil, wenn die beiden Flanschaufnahmen derart unterschiedlich ausgebildet sind, dass das Werkzeug nur in einer vorbestimmten Lage zwischen den Spindelwellen aufnehmbar ist. Beispielsweise können die Durchmesser der beiden Flanschaufnahmen unterschiedlich sein.

Die vorliegende Erfindung stellt des Weiteren ein Bearbeitungswerkzeug zur Verfügung, das einen Aufnahmeflansch nach einem der beigefügten Ansprüchen aufweist, und einen Werkzeugkörper, der auf dem Aufnahmeflansch eingespannt ist, umfasst. Während sich der Aufnahmeflansch konstruktionsbedingt besonders gut für lange Werkzeugkörper mit verhältnismässig kleinem Durchmesser (z.B. Verhältnis von Länge zu Durchmesser grösser als 1) eignet, ist die Erfindung nicht auf solche Werkzeugkörper beschränkt. Der Werkzeugkörper kann also ein beliebiges Verhältnis von Länge zu Durchmesser aufweisen. Das Bearbeitungswerkzeug kann insbesondere ein Schleifwerkzeug sein, insbesondere ein Werkzeug für das Verzahnungsschleifen. Dementsprechend kann es sich bei dem Werkzeugkörper um einen ein- oder mehrteiligen Schleifkörper handeln. Der Schleifkörper kann insbesondere keramisch gebunden und somit abrichtbar sein. Er kann z.B. Schleifkörner aus Korund oder aus kubischem Bornitrid (cBN) enthalten. Der Schleifkörper kann aber z.B. auch polymergebunden sein und insbesondere als Schleifkörper zum Polierschleifen ausgebildet sein. Der Werkzeugkörper kann alternativ oder zusätzlich z.B. einen metallischen Grundkörper mit einem nicht abrichtbaren Hartstoffbelag aufweisen. Es sind auch beliebige Kombinationen aus gleichartigen oder unterschiedlichen Werkzeugkörpern denkbar. Der Werkzeugkörper kann insbesondere eine Schleifscheibe mit schneckenförmig profilierter Aussenkontur (Schleifschnecke) und/oder eine Profilschleifscheibe umfassen. Im Falle eines mehrteiligen Werkzeugkörpers kann es sich beim Werkzeugkörper insbesondere um eine Kombination von zwei oder mehr Schleifschnecken, beispielsweise einer Schruppschleifschnecke mit einer Schlicht- oder Polierschleifschnecke, um eine Kombination einer Schleifschnecke mit einer Profilschleifscheibe, oder um eine Kombination aus zwei oder mehr Profilschleifscheiben handeln.

Die vorliegende Erfindung stellt ausserdem einen Werkzeugkopf für eine Werkzeugmaschine, insbesondere für eine Verzahnmaschine, zur Verfügung. Der Werkzeugkopf weist ein Bearbeitungswerkzeug der vorstehend genannten Art auf. Er umfasst ausserdem eine erste Spindeleinheit mit einer ersten Spindelwelle, die in der ersten Spindeleinheit um die Werkzeugachse drehbar gelagert ist, und eine zweite Spindeleinheit mit einer zweiten Spindelwelle, die in der zweiten Spindeleinheit um die Werkzeugachse drehbar gelagert ist. Die erste Spindeleinheit und die zweite Spindeleinheit sind derart koaxial zueinander angeordnet, dass das Bearbeitungswerkzeug axial zwischen der ersten Spindelwelle und der zweiten Spindelwelle aufgenommen ist. Um das Werkzeug zwischen den Spindelwellen aufzunehmen und ein Drehmoment auf das Werkzeug übertragen zu können, ist es von Vorteil, wenn an der ersten und/oder zweiten Spindelwelle eine Spindelnase derart ausgebildet ist, dass an der betreffenden Spindelnase durch eine zwischen dem Werkzeug und der Spindelnase wirkende axiale Druckkraft eine kraftschlüssige und/oder formschlüssige Verbindung zum Werkzeug herstellbar ist, insbesondere über die schon erwähnte Konusverbindung.

In einigen Ausführungsformen sind erste Spindeleinheit und die zweite Spindeleinheit in einem gemeinsamen Spindelgehäuse aufgenommen. Das zweite Spindellager kann dann in einer axial gegenüber dem gemeinsamen Spindelgehäuse verschiebbaren Lageraufnahme gehalten sein, um das Bearbeitungswerkzeug auswechseln zu können. In anderen Ausführungsformen sind die beiden Spindeleinheiten in separaten Spindelgehäusen aufgenommen, wobei diese Spindelgehäuse gegeneinander entlang der Werkstückachse verschiebbar sind, um das Bearbeitungswerkzeug auszuwechseln.

Besondere Vorteile ergeben sich, wenn die beiden Spindelwellen axial mit dem Bearbeitungswerkzeug verspannt werden, so dass beidseitig eine axiale Druckkraft auf das Bearbeitungswerkzeug wirkt. Dazu ist die folgende Konstruktion besonders vorteilhaft: Die zweite Spindelwelle weist mindestens eine axiale Bohrung auf. Der Werkzeugkopf weist entsprechend mindestens eine Zugstange auf, die sich durch die entsprechende axiale Bohrung der zweiten Spindelwelle hindurch erstreckt, wobei die Zugstange an einem ersten Ende mit der ersten Spindelwelle verbindbar ist. Die Zugstange ist an ihrem zweiten Ende derart mit der zweiten Spindelwelle verbindbar, dass zwischen der ersten Spindelwelle und der zweiten Spindelwelle eine axiale Druckkraft auf das Werkzeug erzeugbar ist. Dazu weist das Bearbeitungswerkzeug, konkret dessen Aufnahmeflansch, entsprechend ebenfalls mindestens eine axiale Bohrung auf, so dass die jeweilige Zugstange durch die entsprechende Bohrung des Bearbeitungswerkzeugs hindurchgeführt werden kann.

Durch diese Art der axialen Verspannung entsteht eine Einheit aus den beiden Spindelwellen und dem Bearbeitungswerkzeug, die in besonderem Masse torsions- und biegesteif ist. Die Kombination aus Zugstange und Spannelement ermöglicht dabei eine hohe axiale Druckkraft zwischen dem Bearbeitungswerkzeug und den beiden Spindelwellen. Im Ergebnis wirkt die genannte Einheit wie eine einzige Welle. Gleichzeitig kann die genannte Konstruktion sehr kompakt ausgeführt werden. Dadurch eignet sich diese Konstruktion besonders für Werkzeuge mit einem kleinen Durchmesser. Dank der direkten Verbindung des festen Flansches mit dem Gegenflansch an der Konusverbindung wird die hohe axiale Druckkraft nicht oder nur zu einem kleinen Teil auf den Werkzeugkörper übertragen.

Die genannte Konstruktion mit Zugstange ist aber auch dann von Vorteil, wenn das Werkzeug anders als in der vorstehend diskutierten Art ausgebildet ist. Insofern bezieht sich die vorliegende Offenbarung auch auf einen Werkzeugkopf für eine Werkzeugmaschine, der nicht Teil der Erfindung wie in den Ansprüchen definiert ist, insbesondere für eine Verzahnmaschine, aufweisend:
eine erste Spindeleinheit mit einer ersten Spindelwelle, die in der ersten Spindeleinheit um eine Werkzeugspindelachse drehbar gelagert ist; und
eine zweite Spindeleinheit mit einer zweiten Spindelwelle, die in der zweiten Spindeleinheit um die Werkzeugspindelachse drehbar gelagert ist,
wobei die erste Spindeleinheit und die zweite Spindeleinheit so angeordnet sind, dass ein Werkzeug axial zwischen der ersten Spindelwelle und der zweiten Spindelwelle aufnehmbar ist, um das Werkzeug zu einer Drehung um die Werkzeugspindelachse anzutreiben,
wobei die zweite Spindelwelle mindestens eine axiale Bohrung aufweist,
wobei der Werkzeugkopf mindestens eine Zugstange aufweist, die sich durch die axiale Bohrung der zweiten Spindelwelle hindurch erstreckt,
wobei die Zugstange an einem Ende auf Zug mit der ersten Spindelwelle verbindbar ist, und
wobei die Zugstange an ihrem anderen Ende derart mit der zweiten Spindelwelle verbindbar ist, dass zwischen der ersten Spindelwelle und der zweiten Spindelwelle eine axiale Druckkraft auf das Werkzeug erzeugbar ist.

Bevorzugt ist genau eine Zugstange vorhanden, die sich durch eine zentrale axiale Bohrung in der zweiten Spindelwelle hindurch erstreckt. Dementsprechend ist es bevorzugt, wenn auch der Aufnahmeflansch eine zentrale axiale Bohrung aufweist, durch die die Zugstange hindurchgeführt werden kann.

In einer besonders einfachen Ausführung ist die Zugstange mit der ersten Spindelwelle verbindbar, indem sie axial in die erste Spindelwelle eingeschraubt wird. Dazu können an dem entsprechenden Ende der Zugstange und an der ersten Spindelwelle zueinander komplementäre Gewinde ausgebildet sein. Es sind aber auch andere Verbindungsarten denkbar, z.B. eine bajonettartige Verbindung.

Die Zugstange kann vorteilhaft an ihrem anderen, freien Ende mit einem Spannelement versehen sein, das eine ringförmige Auflagefläche bildet, wobei die ringförmige Auflagefläche nach der Verbindung der Zugstrange mit der ersten Spindelwelle an der zweiten Spindelwelle anliegt und eine axiale Druckkraft auf die zweite Spindelwelle erzeugt, um diese in Richtung der ersten Spindelwelle zu drücken.

Im einfachsten Fall kann die Zugstange dazu z.B. als Schraube mit einem Schraubenkopf ausgebildet sein. Die Schraube kann dann in die erste Spindelwelle einschraubbar sein, und der Schraubenkopf kann das Spannelement bilden. Die axiale Spannkraft wird dann ganz einfach durch Anziehen der Schraube erzeugt.

In einer anderen, ebenfalls sehr einfachen Ausführungsform ist die Zugstange an ihrem freien Ende mit einem Aussengewinde versehen, auf das eine Mutter aufschraubbar ist. In diesem Fall bildet die Mutter das Spannelement, und die axiale Spannkraft wird ganz einfach durch Anziehen der Mutter erzeugt.

Bevorzugt weist der Werkzeugkopf jedoch ein Spannelement auf, das lösbar mit der Zugstange verbindbar ist und eine Spannkraft erzeugt, die vorzugsweise rein axial wirkt, ohne dass ein Anziehen des Spannelements eine Drehmomentkomponente um die Werkzeugspindelachse erzeugt. Das Spannelement weist dazu ein Basiselement auf, das starr mit der Zugstange verbindbar ist, z.B. über eine Schraubverbindung, über ein Bajonett oder über eine Spannbuchse. Das Basiselement kann eine zentrale Aufnahmeöffnung aufweisen, um die Zugstange aufzunehmen, oder (wenn genügend Raum zur Verfügung steht) einen Zapfen, der in einer axialen Bohrung der Zugstange fixierbar ist. Das Spannelement weist zudem ein Axialdruckelement auf, das gegenüber dem Basiselement axial in Richtung der zweiten Spindelwelle bewegbar, insbesondere axial verschiebbar, ist, um die zweite Spindelwelle axial in Richtung der ersten Spindelwelle zu drücken. Das Axialdruckelement kann insbesondere ringförmig sein und die zentrale Aufnahmeöffnung oder den Zapfen des Basiselements umgeben; in diesem Fall kann das Axialdruckelement auch als "Druckring" bezeichnet werden. Das Axialdruckelement bildet die schon erwähnte ringförmige Auflagefläche. Das Spannelement weist ausserdem mindestens ein Betätigungselement auf, wobei das Betätigungselement relativ zum Basiselement bewegbar ist, um das Axialdruckelement relativ zum Basiselement axial zu bewegen. Als Betätigungselement kann z.B. eine Druckschraube dienen, die entlang einer Längs- oder Querrichtung in das Basiselement einschraubbar ist. Derartige Spannelemente sind aus dem Stand der Technik an sich bekannt und kommerziell in vielen Varianten erhältlich.

In einigen Ausführungsformen erfolgt die Kraftübertragung vom Betätigungselement zum Axialdruckelement rein mechanisch. Beispielsweise können als Betätigungselemente mehrere Zylinderschrauben dienen, die axial am Basiselement gehalten sind und in das Axialdruckelement einschraubbar sind, um dieses relativ zum Basiselement axial zu verschieben. In anderen Ausführungsformen dienen ein oder mehrere Gewindestifte, die im Basiselement über eine Gewindeverbindung in Richtung des Axialdruckelements verstellbar sind, als Betätigungselemente. In nochmals anderen Ausführungsformen wirkt das Betätigungselement beispielsweise auf ein Getriebe, das das Axialdruckelement vorschiebt. Derartige Spannelemente sind z.B. unter den Bezeichnungen ESB, ESG oder ESD von der Enemac GmbH, Kleinwallstadt, Deutschland erhältlich.

In anderen Ausführungsformen erfolgt die Kraftübertragung vom Betätigungselement zum Axialdruckelement hydraulisch. Dazu kann das Betätigungselement z.B. als Druckschraube ausgebildet sein, die beim Einschrauben einen Druck in einem Hydrauliksystem erzeugt, wobei dieser Druck auf das Axialdruckelement wirkt. Derartige Spannelemente sind beispielsweise von der Albert Schrem Werkzeugfabrik GmbH, Herbrechtingen, Deutschland erhältlich.

Statt die axiale Druckkraft zwischen Zugstange und zweiter Spindelwelle mit einem Spannelement zu erzeugen, das im Betrieb an der Zugstange verbleibt, ist es auch denkbar, zunächst die Druckkraft mit einem Spannwerkzeug zu erzeugen, die Verbindung im gespannten Zustand mit einer einfachen Mutter zu fixieren, und das Spannwerkzeug anschliessend wieder zu entfernen.

Das Werkzeug kann aber auch auf eine andere Art als mit einer durchgehenden Zugstange zwischen der ersten Spindelwelle und der zweiten Spindelwelle verspannt werden, so dass eine fest verspannte Einheit aus den beiden Spindelwellen und dem Werkzeug entsteht. So sind Ausführungsformen denkbar, bei denen eine erste Zugstange an einem ersten Ende mit dem Werkzeug verbindbar ist, beispielsweise mit dem Werkzeug verschraubbar oder über Hohlschaftkegel verbindbar. Die erste Zugstange kann sich dann durch eine axiale Bohrung der ersten Spindelwelle hindurch erstrecken und an ihrem zweiten Ende derart mit der ersten Spindelwelle verbindbar sein, dass eine axiale Druckkraft zwischen der ersten Spindelwelle und dem Werkzeug erzeugbar ist. Eine zweite Zugstange kann auf der gegenüberliegenden Seite des Werkzeugs angeordnet sein. Diese zweite Zugstange kann wiederum an einem ersten Ende mit dem Werkzeug verbindbar sein, beispielsweise mit dem Werkzeug verschraubbar oder über Hohlschaftkegel verbindbar. Die zweite Zugstange kann sich dann durch eine axiale Bohrung der zweiten Spindelwelle hindurch erstrecken und an ihrem zweiten Ende derart mit der zweiten Spindelwelle verbindbar sein, dass eine axiale Druckkraft zwischen der zweiten Spindelwelle und dem Werkzeug erzeugbar ist.

Alternativ zur axialen Verspannung mit einer Zugstange kann der Aufnahmeflansch auch auf eine andere Weise mit mindestens einer Spindelwelle verbindbar sein. Insbesondere kann der Aufnahmeflansch mit mindestens einem Gewinde, vorzugsweise einer Gewindebohrung, ausgerüstet sein, um die mindestens eine Spindelwelle mit dem Aufnahmeflansch zu verbinden.

Um den Werkzeugwechsel zu erleichtern, ist es von Vorteil, wenn die zweite Spindeleinheit relativ zur ersten Spindeleinheit axial verschiebbar ist. Wenn beide Spindeleinheiten in einem gemeinsamen Spindelgehäuse untergebracht sind, kann dies dadurch erreicht werden, dass die Spindellager für die zweite Spindelwelle relativ zu diesem Spindelgehäuse axial verschiebbar sind.

Die erste und/oder zweite Spindeleinheit kann einen Antriebsmotor aufweisen, der dazu ausgebildet ist, die entsprechende Spindelwelle zu einer Drehung um die Werkzeugspindelachse anzutreiben, um so das Werkzeug anzutreiben. In einigen Ausführungsformen weist nur die erste Spindeleinheit einen Antriebsmotor auf, und die zweite Spindeleinheit bildet eine passive Gegenspindel für die erste Spindeleinheit, ohne einen eigenen Antriebsmotor. In anderen Ausführungsformen weist auch die zweite Spindeleinheit einen eigenen Antriebsmotor auf. Bei dem jeweiligen Antriebsmotor kann es sich insbesondere um einen Direktantrieb handeln.

Die vorliegende Offenbarung stellt ausserdem eine Werkzeugmaschine zur Verfügung, die nicht Teil der Erfindung wie in den Ansprüchen definiert ist, die einen Werkzeugkopf der vorstehend genannten Art und mindestens eine Werkstückspindel, um ein Werkstück zur Drehung um eine Werkstückachse anzutreiben, aufweist. Die Werkzeugmaschine kann als Verzahnmaschine ausgebildet sein, insbesondere als Verzahnungsschleifmaschine. Dazu kann die Werkzeugmaschine eine Maschinensteuerung aufweisen, die dazu ausgebildet (insbesondere entsprechend programmiert) ist, die Maschine zu veranlassen, eine Verzahnung eines Werkstücks, das auf der mindestens einen Werkstückspindel aufgenommen ist, mit dem Werkzeug zu bearbeiten. Insbesondere kann die Maschinensteuerung dazu ausgebildet sein, die Maschine dazu zu veranlassen, die Verzahnung des Werkstücks durch Profilschleifen oder Wälzschleifen zu bearbeiten. Zu diesem Zweck kann die Maschinensteuerung dazu ausgebildet sein, eine geeignete Wälzkopplung zwischen der Werkstückspindel und der Werkzeugspindel herzustellen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Schleifwerkzeug, das einen Aufnahmeflansch nach dem Stand der Technik umfasst, in einem zentralen Längsschnitt;
- Fig. 2: ein Schleifwerkzeug, das einen Aufnahmeflansch nach einer ersten Ausführungsform der vorliegenden Erfindung umfasst, in einer perspektivischen Ansicht;
- Fig. 3: das Schleifwerkzeug der Fig. 2 in einem zentralen Längsschnitt;
- Fig. 4: den Aufnahmeflansch des Schleifwerkzeugs der Fig. 2 in einer perspektivischen Ansicht;
- Fig. 5: ein vergrössertes Detail des Aufnahmeflansches der Fig. 4 in einem zentralen Längsschnitt in der Ebene V-V der Fig. 6;
- Fig. 6: den Aufnahmeflansch der Fig. 4 in einer stirnseitigen Ansicht auf den Gegenflansch;
- Fig. 7: einen Ausschnitt aus einem zentralen Längsschnitt durch ein Schleifwerkzeug mit einem Aufnahmeflansch gemäss einer zweiten Ausführungsform;
- Fig. 8: einen Ausschnitt aus einem zentralen Längsschnitt durch ein Schleifwerkzeug mit einem Aufnahmeflansch gemäss einer dritten Ausführungsform;
- Fig. 9: einen Ausschnitt aus einem zentralen Längsschnitt durch ein Schleifwerkzeug mit einem Aufnahmeflansch gemäss einer vierten Ausführungsform;
- Fig. 10: einen Werkzeugkopf in einer schematischen perspektivischen Ansicht;
- Fig. 11: den Werkzeugkopf der Fig. 10 in einer perspektivischen Schnittdarstellung;
- Fig. 12: eine Spannmutter in einem zentralen Längsschnitt;
- Fig. 13: die Spannmutter der Fig. 13 in einer perspektivischen Ansicht; und
- Fig. 14: eine Werkzeugmaschine zur Hartfeinbearbeitung von Zahnrädern durch Wälzschleifen in einer schematischen perspektivischen Ansicht.

### BESCHREIBUNG BEVORZUGTER AUSFÜHRUNGSFORMEN

### Definitionen

*Verzahnmaschine:* Eine Maschine, die für die Erzeugung oder Bearbeitung von Verzahnungen an Werkstücken ausgebildet ist, insbesondere von Innen- oder Aussenverzahnungen an Zahnrädern. Beispielsweise kann es sich dabei um eine Feinbearbeitungsmaschine handeln, mit der vorverzahnte Werkstücke bearbeitet werden, insbesondere um eine Hartfeinbearbeitungsmaschine, mit der vorverzahnte Werkstücke nach dem Härten bearbeitet werden. Eine Verzahnmaschine weist eine Maschinensteuerung auf, die so programmiert ist, dass sie eine automatische Bearbeitung der Verzahnung steuern kann.

*Wälzbearbeitung:* Eine Art der Verzahnungsbearbeitung, bei der ein Werkzeug auf einem Werkstück abwälzt und dabei eine Schnittbewegung erzeugt. Es sind verschiedene Wälzbearbeitungsverfahren bekannt, wobei zwischen Verfahren mit geometrisch unbestimmter Schneide wie Wälzschleifen oder Wälzhonen und Verfahren mit geometrisch bestimmter Schneide wie Wälzfräsen, Wälzschälen, Wälzschaben oder Wälzstossen unterschieden wird.

*Wälzschleifen:* Beim Wälzschleifverfahren handelt es sich um ein kontinuierliches spanabhebendes Verfahren mit geometrisch unbestimmter Schneide zur Herstellung achssymmetrischer periodischer Strukturen, bei dem als Werkzeug eine Schleifscheibe mit schneckenförmig profilierter Aussenkontur ("Schleifschnecke") verwendet wird. Werkzeug und Werkstück werden auf Rotationsspindeln aufgenommen. Durch eine Kopplung der Drehbewegungen von Werkzeug und Werkstück um die Drehachsen wird die verfahrenstypische Wälzbewegung realisiert. Durch diese Wälzbewegung und eine axiale Vorschubbewegung des Werkzeugs oder des Werkstücks entlang der Werkstückachse wird eine Schnittbewegung erzeugt.

*Werkzeugkopf:* Als "Werkzeugkopf" wird im vorliegenden Dokument eine Baugruppe bezeichnet, die dazu ausgebildet ist, ein Bearbeitungswerkzeug aufzunehmen und zu einer Drehung anzutreiben. Der Werkzeugkopf kann insbesondere auf einem Schwenkkörper und/oder einem oder mehreren Schlitten montiert sein, um das Werkzeug relativ zu einem Werkstück auszurichten und zu positionieren.

*Spindeleinheit:* Im Werkzeugmaschinenbau wird eine drehbare Welle, auf der ein Werkzeug oder Werkstück aufspannbar ist, meist als "Spindel" bezeichnet. Häufig wird aber auch eine Baugruppe, die neben der drehbaren Welle auch die zugehörigen Spindellager zur drehbaren Lagerung der Welle und das zugehörige Gehäuse umfasst, als "Spindel" bezeichnet. Im vorliegenden Dokument wird der Begriff "Spindel" in diesem Sinne verwendet. Die Welle alleine wird als "Spindelwelle" bezeichnet. Eine Baugruppe, die neben der Spindelwelle mindestens auch die zugehörigen Spindellager umfasst, wird als "Spindeleinheit" bezeichnet. Eine "Spindeleinheit" kann ein eigenes Gehäuse umfassen, sie kann aber auch zusammen mit einer weiteren Spindeleinheit in einem gemeinsamen Gehäuse aufgenommen sein.

### Aufnahmeflansch gemäss der ersten Ausführungsform

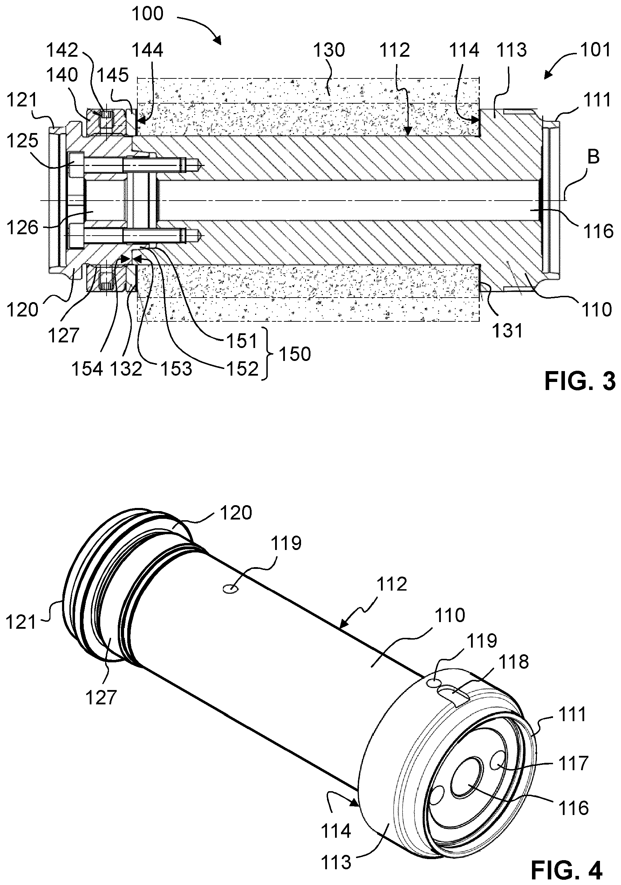

In den Figuren 2 und 3 ist ein Bearbeitungswerkzeug 100 dargestellt. Das Bearbeitungswerkzeug 100 umfasst einen Aufnahmeflansch 101, in dem ein Werkzeugkörper 130 eingespannt ist. Der Aufnahmeflansch 101 ist in den Figuren 4 bis 6 alleine dargestellt. Funktionsähnliche Teile sind mit denselben Bezugszeichen wie in der Fig. 1 versehen.

Der Werkzeugkörper 130 ist im vorliegenden Beispiel ein Schleifkörper. Bei dem Bearbeitungswerkzeug 100 handelt es sich im vorliegenden Beispiel also um ein Schleifwerkzeug. Es können aber auch andere Arten von Werkzeugkörpern 130 vorgesehen sein.

Der Aufnahmeflansch 101 definiert eine Werkzeugachse B, um die er rotieren kann. Er umfasst einen festen Flansch 110 und einen Gegenflansch 120. Der feste Flansch 110 weist an seinem in der Fig. 3 rechts gelegenen Ende eine erste Flanschaufnahme 111 zur Verbindung mit einer ersten Spindelwelle auf. Die erste Flanschaufnahme 111 ist im vorliegenden Beispiel als Innenkonus ("Kegelaufnahme") mit einer innerhalb des Innenkonus angeordneten Plananlagefläche ausgebildet, konkret als Kurzkegelaufnahme 1:4 nach DIN ISO 702-1:2010-04. Der feste Flansch 110 weist eine zylindrische äussere Mantelfläche 112 auf. Die Mantelfläche 112 wird an demjenigen Ende des festen Flansches 110, an dem die erste Flanschaufnahme 111 ausgebildet ist, durch einen Bund 113 begrenzt. Der Bund 113 weist einen vergrösserten Aussendurchmesser auf. Er bildet eine ringförmige erste Spannfläche 114 für den Werkzeugkörper 130. Die erste Spannfläche 114 erstreckt sich in einer Ebene, die orthogonal zur Werkzeugachse B verläuft. Eine zentrale Bohrung 116 erstreckt sich entlang der Werkzeugachse B durch den festen Flansch 110 hindurch. Positionierbohrungen 117 dienen zur Positionierung und Fixierung des festen Flansches 110 in Umfangsrichtung während des Einspannens des Werkzeugkörpers 130.

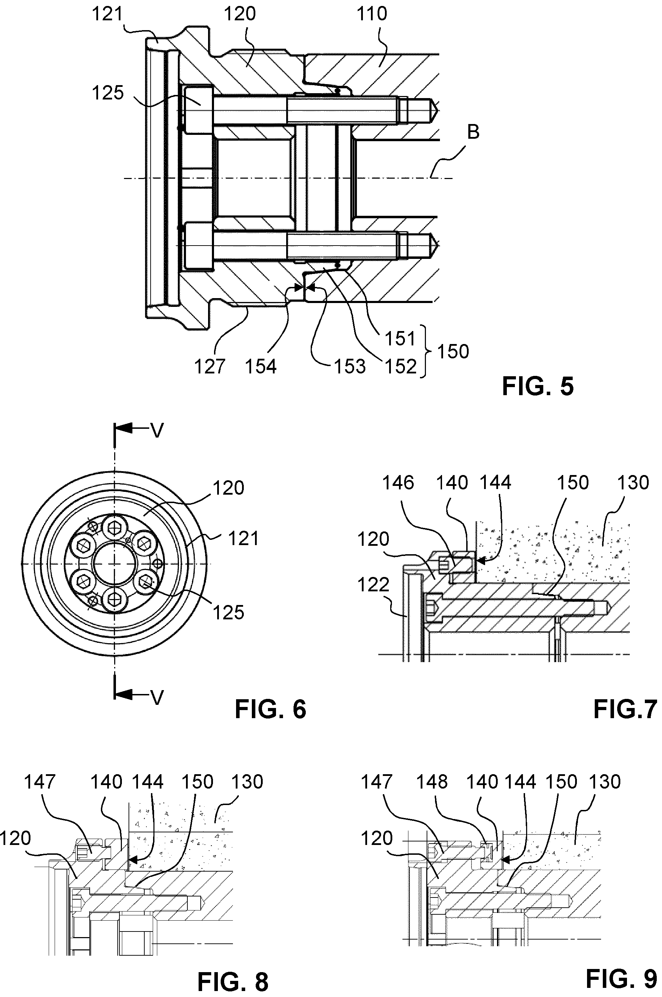

In einer Aufnahmekerbe 118 am Aussenumfang kann ein maschinenlesbarer Datenträger angebracht werden, z.B. ein RFID-Tag oder ein optischer Code. Wuchtbohrungen 119 dienen zum Auswuchten und/oder erlauben das Anbringen von zusätzlichen Wuchtgewichten. An seinem in der Fig. 3 links gelegenen Ende, d.h. an dem der ersten Flanschaufnahme 111 abgewandten Ende, ist am festen Flansch 110 ein weiterer Innenkonus ("Kegelaufnahme") 151 ausgebildet. Dieser ist in der Fig. 5 besonders gut erkennbar. Der an den Innenkonus 151 angrenzende, den Innenkonus 151 umgebende Bereich der Stirnseite des festen Flansches 110 bildet eine erste Plananlagefläche 153. Die erste Plananlagefläche 153 erstreckt sich orthogonal zur Werkzeugachse B.

Der Gegenflansch 120 weist an seinem in der Fig. 3 links gelegenen Ende, d.h. an demjenigen Ende, das der ersten Flanschaufnahme 111 abgewandt ist, eine zweite Flanschaufnahme 121 auf. Auch die zweite Flanschaufnahme 121 ist hier als Innenkonus ("Kegelaufnahme") mit einer innerhalb des Innenkonus angeordneten Plananlagefläche ausgebildet, konkret als Kurzkegelaufnahme 1:4 nach DIN ISO 702-1:2010-04. An seinem in der Fig. 3 rechts gelegenen Ende, d.h. an seinem zum festen Flansch 110 hin weisenden Ende, ist am Gegenflansch 120 ein Aussenkonus ("Kegel") 152 ausgebildet, der zum Innenkonus ("Kegelaufnahme") 151 am festen Flansch 110 komplementär ist. Der Aussenkonus 152 ist radial von einer ringförmigen zweiten Plananlagefläche 154 (siehe Fig. 6) umgeben, die zur ersten Plananlagefläche 153 am festen Flansch hin weist. Eine zentrale Bohrung 126 erstreckt sich entlang der Werkzeugachse B durch den Gegenflansch 120 hindurch. Die Bohrung 126 fluchtet mit der Bohrung 116 des festen Flansches 110. Die Bohrungen 116, 126 bilden gemeinsam eine durchgehende axiale Bohrung durch den Aufnahmeflansch 101.

Der Gegenflansch 120 ist mit dem festen Flansch 110 über eine Konusverbindung mit Plananlage verbunden. Die Konusverbindung 150 wird durch den Innenkegel 151 am festen Flansch 110 und den dazu komplementären Aussenkegel 152 am Gegenflansch 120 hergestellt. Die Plananlage erfolgt an den beiden zueinander komplementären Plananlageflächen 153, 154.

Ein wesentlicher Vorteil dieser Konstruktion liegt darin, dass, speziell bei kleinen Schleifscheiben, durch diese Aufteilung des Aufnahmeflansches beidseitig die Durchmesser der Flanschaufnahmen 111, 121 für die Übertragung des Drehmomentes entscheidend grösser gewählt werden können, als wenn beide Flanschaufnahmen auf dem festen Flansch angebracht wären. Da aber jede Trennung auch nachteilig ist, wird eine Verbindung mit hoher Steifigkeit benötigt. Dies wird durch die Konusverbindung mit Plananlage sichergestellt. Zusätzlich stellt diese Art der Verbindung auch sicher, dass der feste Flansch 110 und der Gegenflansch 120 nach jedem Schleifscheibenwechsel wieder perfekt passen und einfach wieder getrennt werden können.

Der Gegenflansch 120 wird durch mehrere gleichmässig in Umfangsrichtung verteilte Zylinderschrauben 125 am festen Flansch 110 fixiert. Die Zylinderschrauben 125 erzeugen eine definierte axiale Anpresskraft zwischen dem festen Flansch 110 und dem Gegenflansch 120. Diese axiale Anpresskraft wird direkt über die Konusverbindung mit Plananlage zwischen dem festen Flansch 110 und dem Gegenflansch 120 übertragen.

Auf einer äusseren Mantelfläche des Gegenflansches 120 ist ein Aussengewinde 127 ausgebildet. Auf das Aussengewinde 127 ist ein Positionierring 140 aufgeschraubt. Um das Verdrehen des Positionierrings 140 mit einem passenden Schlüssel zu ermöglichen, sind am Aussenumfang des Positionierrings 140 mehrere Längsnuten 141 ausgebildet. Der Positionierring 140 kann mit radialen Fixierstiften 142 am Gegenflansch 120 fixiert werden, um ein unbeabsichtigtes Verdrehen des Positionierrings 140 zu verhindern. Der Positionierring 140 bildet an seiner zum festen Flansch 110 hin weisenden Stirnseite eine zweite Spannfläche 144. Die zweite Spannfläche 144 erstreckt sich in einer Ebene, die senkrecht zur Werkzeugachse B verläuft. Sie weist in Richtung der ersten Spannfläche 114 am festen Flansch 110.

Der Werkzeugkörper 130 weist eine zentrale Bohrung entlang der Werkzeugachse B auf. Der Werkzeugkörper 130 ist mit dieser Bohrung auf den festen Flansch 110 aufgeschoben. Dabei liegt er im Bereich seiner Bohrung mit einer inneren Mantelfläche auf der äusseren Mantelfläche 112 des festen Flansches 110 auf. Der Werkzeugkörper 130 ist axial an der ersten Spannfläche 114 am festen Flansch 110 abgestützt. Dabei kann zwischen dem Werkzeugkörper 130 und der ersten Spannfläche 114 eine dünne Zwischenscheibe 131 vorgesehen sein, die z.B. aus Aluminium gefertigt sein kann. Der Werkzeugkörper 130 ist mit Hilfe des Positionierrings 140 und eines Zwischenrings 145 am Aufnahmeflansch 101 fixiert. Auch hier kann zwischen dem Werkzeugkörper und dem Zwischenring 145 eine dünne Zwischenscheibe 132 vorgesehen sein, die wiederum aus Aluminium gefertigt sein kann. Dabei übt der Positionierring 140 mit der zweiten Spannfläche 144 über den Zwischenring 145 und gegebenenfalls die Zwischenscheibe 132 eine axiale Einspannkraft auf den Werkzeugkörper 130 auf. Durch geeignete Positionierung des Positionierrings 140 kann diese axiale Einspannkraft unabhängig von der axialen Anpresskraft zwischen dem festen Flansch 110 und dem Gegenflansch 120 eingestellt werden.

Um den Werkzeugkörper 130 einzuspannen, wird wie folgt vorgegangen. Zunächst wird der Gegenflansch 120 vom festen Flansch 110 gelöst. Der Positionierring 140 wird so weit wie möglich in Richtung der zweiten Flanschaufnahme 121 zurückgeschraubt, und der Zwischenring 145 wird so weit wie möglich zurückgeschoben. Der Werkzeugkörper 130 und gegebenenfalls die Zwischenscheiben 131, 132 werden auf den festen Flansch 110 aufgeschoben, und der Gegenflansch 120 wird mit den Schrauben 125 am festen Flansch 110 fixiert. Die Schrauben 125 werden nun angezogen, bis eine ausreichende axiale Anpresskraft zwischen dem festen Flansch 110 und dem Gegenflansch 120 herrscht. Der Werkzeugkörper 130 ist während dieses Vorgangs axial noch nicht eingespannt. Erst nachdem die Verbindung zwischen dem festen Flansch 110 und dem Gegenflansch 120 hergestellt wurde, wird nun der Positionierring 140 vorgeschraubt, bis über den Zwischenring 145 die gewünschte axiale Einspannkraft auf den Werkzeugkörper 130 wirkt. Die axiale Einspannkraft auf den Werkzeugkörper 130 wird dadurch unabhängig von der axialen Anpresskraft zwischen dem festen Flansch 110 und dem Gegenflansch 120 eingestellt.

Der Aufnahmeflansch 101 kann so ausgestaltet sein, dass er nur die Aufnahme einer bestimmten Art von Werkzeugkörper 130 erlaubt. Beispielsweise können je nach Art des Werkzeugkörpers 130 unterschiedliche Aussendurchmesser der äusseren Mantelfläche 112 vorgesehen sein. Insbesondere kann für Schleifkörper mit Schleifkörnern aus Korund ein grösserer Aussendurchmesser als für Schleifkörper mit Schleifkörnern aus cBN vorgesehen werden. Auf diese Weise wird zuverlässig verhindert, dass fälschlicherweise auf einem Aufnahmeflansch, der für einen Korund-Schleifkörper vorgesehen ist, ein cBN-Schleifkörper montiert werden kann und umgekehrt. Anstelle unterschiedlicher Durchmesser für unterschiedliche Werkzeugtypen kann dies auch durch eine unterschiedliche Formgebung erreicht werden, z.B. durch die Anbringung von Nuten, die Ausbildung eines Polygonbereichs, oder die Ausbildung einer Verzahnung am Aufnahmeflansch.

Damit die beiden Flanschaufnahmen 111, 121 präzise zueinander ausgerichtet sind, werden der feste Flansch 110 und der Gegenflansch 120 jeweils gepaart gefertigt, einschliesslich Wuchten.

### Zweite bis vierte Ausführungsform

In der Fig. 7 ist eine zweite Ausführungsform illustriert. Diese unterscheidet sich von der ersten Ausführungsform in erster Linie durch die Art und Weise, in der der Werkzeugkörper 130 im Aufnahmeflansch 101 eingespannt ist. Wie bei der ersten Ausführungsform ist dafür ein Positionierring 140 vorgesehen. Dieser ist axial gegenüber dem Gegenflansch 120 verschiebbar. In den Positionierring 140 sind mehrere Einstellschrauben 146 in Form von Zylinderschrauben eingeschraubt. Die Einstellschrauben 146 sind in Umfangsrichtung gleichmässig verteilt angeordnet. Sie sind axial am Gegenflansch 120 abgestützt, so dass sie an einer axialen Bewegung in Richtung der zweiten Flanschaufnahme 122 gehindert sind. Wenn die Zylinderschrauben 146 aus dem Positionierring 140 herausgeschraubt werden, drücken sie den Positionierring 140 axial gegen den Werkzeugkörper 130 und erzeugen so eine axiale Einspannkraft.

In der Fig. 8 ist eine dritte Ausführungsform illustriert. Auch diese Ausführungsform unterscheidet sich von der ersten Ausführungsform in erster Linie durch die Art und Weise, in der der Werkzeugkörper 130 im Aufnahmeflansch 101 eingespannt ist. Wiederum ist der Positionierring 140 axial gegenüber dem Gegenflansch 120 verschiebbar. Hierzu dienen Positionierstifte 147 in Form von Gewindestiften, die im Gegenflansch 120 in Gewinden geführt sind. Wenn die Positionierstifte 147 in den Gegenflansch eingeschraubt werden, drücken sie den Positionierring 140 axial gegen den Werkzeugkörper 130, um die axiale Einspannkraft zu erzeugen.

In der Fig. 9 ist eine vierte Ausführungsform illustriert. Diese entspricht weitgehend der dritten Ausführungsform. Im Gegensatz zur dritten Ausführungsform sind im Positionierring 140 jedoch axiale Federelemente 148 in Form von Federbüchsen angeordnet. Die Positionierstifte 147 wirken auf diese Federelemente. Aufgrund ihrer elastischen Eigenschaften stellen die Federelemente sicher, dass selbst dann noch eine ausreichende axiale Einspannkraft auf den Werkzeugkörper 130 wirkt, wenn sich die Länge des Werkzeugkörpers 130 ändert, z.B. aufgrund von Setzvorgängen im Werkzeugkörper 130.

### Werkzeugkopf mit Bearbeitungswerkzeug

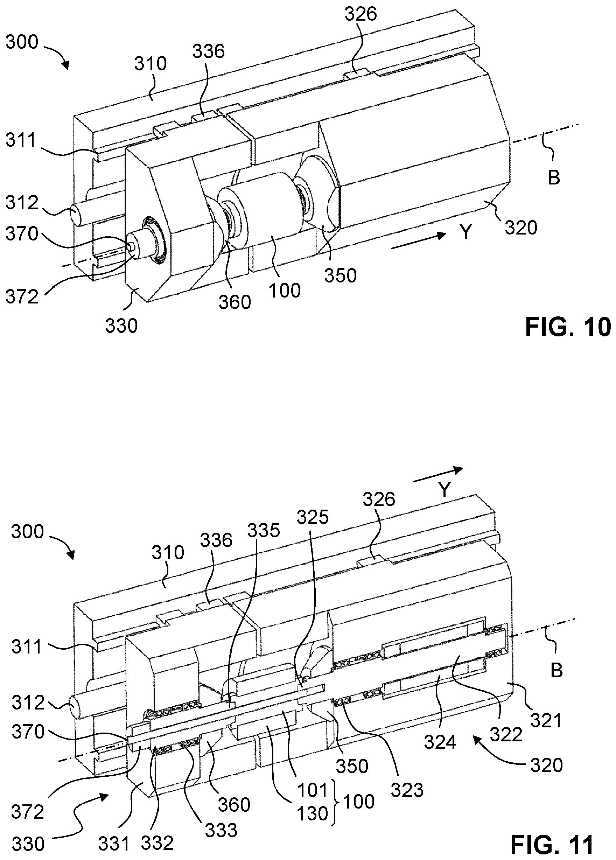

In den Figuren 10 und 11 ist ein Werkzeugkopf mit einem Bearbeitungswerkzeug 100 gemäss einer der vorstehend diskutierten Ausführungsformen illustriert. Das Bearbeitungswerkzeug 100 ist dabei aus Gründen der besseren Übersichtlichkeit nur schematisch dargestellt.

Der Werkzeugkopf umfasst eine Basis 310. Auf der Basis 310 ist eine Linearführung 311 ausgebildet. Auf der Linearführung 311 sind eine erste Spindeleinheit 320 und eine zweite Spindeleinheit 330 entlang einer Shiftrichtung Y verschiebbar geführt. Hierzu weisen die Spindeleinheiten jeweils entsprechende Führungsschuhe 326, 336 auf. Zwischen den Spindeleinheiten 320, 330 ist das Bearbeitungswerkzeug 100 gehalten. Die Werkzeugachse B verläuft parallel zur Shiftrichtung Y.

Die zweite Spindeleinheit 320 und die erste Spindeleinheit 330 können miteinander gekoppelt werden, nachdem das Bearbeitungswerkzeug 100 zwischen ihnen aufgenommen wurde. Sie lassen sich im gekoppelten Zustand mit einem nicht zeichnerisch dargestellten Shiftantrieb und einem Kugelgewindetrieb 312 gemeinsam entlang der Shiftrichtung Y bewegen, um den Werkzeugbereich, der mit einem Werkstück in Eingriff kommt, entlang der Werkzeugachse zu verändern.

Im vorliegenden Beispiel handelt es sich bei der Spindeleinheit 320 um eine Motorspindel mit einem Antriebsmotor 324, der eine erste Spindelwelle 322 zu einer Drehung um die Werkzeugachse B antreibt. Die erste Spindelwelle 322 ist im Spindelgehäuse 321 der ersten Spindeleinheit 320 in Spindellagern 323 gelagert. Bei der zweiten Spindeleinheit 330 handelt es sich im vorliegenden Beispiel um eine Gegenspindel mit einer nicht angetriebenen zweiten Spindelwelle 332, die im Spindelgehäuse 331 der zweiten Spindeleinheit 330 in Spindellagern 333 gelagert ist. Stattdessen können aber auch beide Spindeleinheiten 320, 330 angetrieben sein.

An den werkzeugseitigen Enden der Spindelwellen 322, 332 sind sich gegenüberstehende Spindelaufnahmen in Form von Spindelnasen 325, 335 ausgebildet. Die Form der Spindelnasen ist komplementär zur Form der Flanschaufnahmen 111, 121 des Aufnahmeflansches 101 des Bearbeitungswerkzeugs 100. Sie weisen jeweils eine zum Bearbeitungswerkzeug 100 hin konisch zulaufende Form und eine Plananlagefläche an ihrer jeweiligen Stirnseite auf. Beispielsweise kann jede Spindelnase als Kegelschaft 1:4 nach DIN ISO 702-1:2010-04 ausgebildet sein.

Zwischen den Flanschaufnahmen 111, 121 und den Spindelnasen 325, 335 besteht also jeweils eine Konusverbindung mit Plananlage. Die Konusverbindungen können an den beiden Enden des Bearbeitungswerkzeugs 100 unterschiedliche Durchmesser aufweisen, um sicherzustellen, dass das Bearbeitungswerkzeug 100 nur in der korrekten Orientierung zwischen den Spindelnasen 325, 335 aufgenommen werden kann.

Das Bearbeitungswerkzeug 100 ist mit einer Zugstange 370 und einer Spannmutter 372 zwischen den Spindelnasen 325, 335 axial verspannt. Dazu weisen das Bearbeitungswerkzeug 100 und die zweite Spindelwelle 332 jeweils eine durchgehende zentrale axiale Bohrung auf. An ihrem werkzeugseitigen Ende weist auch die erste Spindelwelle 322 eine zentrale axiale Bohrung auf. In dieser Bohrung ist ein Innengewinde ausgebildet. Die Zugstange 370 ist durch die zentralen Bohrungen der Spindelwelle 332 und des Bearbeitungswerkzeugs 100 hindurchgeschoben. Sie weist an ihrem zur ersten Spindeleinheit 320 hin weisenden Ende ein Aussengewinde auf, das in das Innengewinde der ersten Spindelwelle 322 eingeschraubt ist. An ihrem anderen Ende weist sie ebenfalls ein Aussengewinde auf. Auf dieses Aussengewinde ist die Spannmutter 372 aufgeschraubt. Durch Anziehen der Spannmutter 372 übt die Spannmutter 372 einen axialen Druck auf die zweite Spindelwelle 332 in Richtung des Bearbeitungswerkzeugs 100 aus. Dadurch wird das Bearbeitungswerkzeug 100 zwischen den Spindelnasen 325, 335 axial verspannt. Insgesamt entsteht so eine einzige durchgehende Welle mit hoher Biege- und Torsionssteifigkeit.

Auf der ersten Spindelwelle 322 ist im axialen Bereich zwischen dem Gehäuse 321 der ersten Spindeleinheit 320 und dem Bearbeitungswerkzeug 100 eine erste Wuchteinheit 350 angeordnet. Eine zweite Wuchteinheit 360 ist auf der zweiten Spindelwelle 332 axial zwischen dem Gehäuse 331 der zweiten Spindeleinheit 330 und dem Bearbeitungswerkzeug 100 angeordnet. Die Wuchteinheiten 350, 360 umgeben die jeweilige Spindelwelle 322, 332 ausserhalb des Gehäuses der jeweiligen Spindeleinheit 320, 330. Sie weisen jeweils ein Gehäuse auf, das sich von der zugeordneten Spindeleinheit in Richtung des Bearbeitungswerkzeugs 100 verjüngt. Durch die sich verjüngende Aussenkontur der Wuchteinheiten 350, 360 wird die Gefahr von Kollisionen zwischen den Wuchteinrichtungen und einem Werkstück vermindert. Jede der Wuchteinheiten 350, 360 ist als Ringwuchtsystem ausgebildet. Die beiden Wuchteinheiten 350, 360 dienen dazu, das System aus dem Bearbeitungswerkzeug 100 und den damit verspannten Spindelwellen 322, 332 in zwei Wuchtebenen auszuwuchten. Alternativ ist es denkbar, mindestens ein Wuchtelement im Aufnahmeflansch anzuordnen.

### Spannmutter

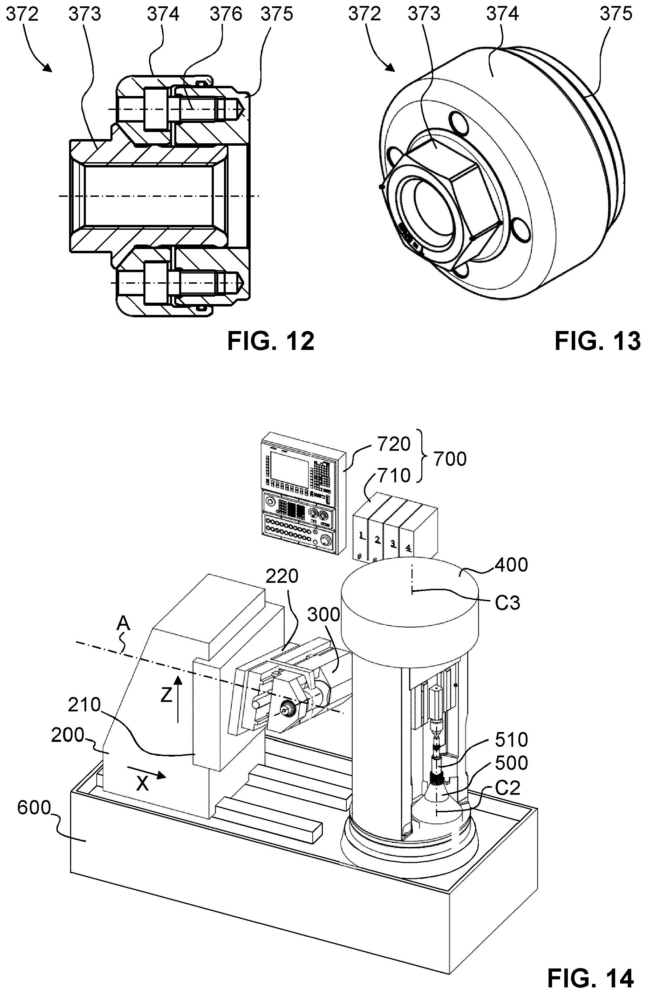

In den Figuren 12 und 13 ist beispielhaft eine Spannmutter 372 illustriert, die nicht Teil der Erfindung wie in den Ansprüchen definiert ist, wie sie in dem vorstehend beschriebenen Werkzeugkopf zum Einsatz kommen kann.

Die Spannmutter 372 weist ein Basiselement 373 auf, das eine zentrale Bohrung mit einem Innengewinde definiert, um das Basiselement 373 auf eine Zugstange mit einem entsprechenden Aussengewinde aufzuschrauben. An einem Ende ist das Basiselement 373 aussenseitig nach Art einer Sechskantmutter ausgebildet. Auf dem Basiselement 373 ist ein Stützring 374 angebracht. Dieser liegt an einem Bund des Basiselements 373 derart an, dass er an einer axialen Bewegung in einer Richtung (in der Fig. 9 nach links) gehindert ist. Auf dem Basiselement 373 ist ausserdem ein ringförmiges Axialdruckelement 375 axial verschiebbar geführt. Mehrere Betätigungselemente 376 in Form von Druckschrauben sind in das Axialdruckelement 375 eingeschraubt und derart axial am Stützring 374 abgestützt, dass sie entlang einer Richtung (in der Fig. 9 nach links) an einer axialen Bewegung gehindert sind. Indem die Druckschrauben aus dem Axialdruckelement 375 herausgeschraubt werden, wird das Axialdruckelement 375 gegenüber dem Basiselement 373 entlang derjenigen Richtung, die der Stützrichtung entgegengesetzt ist (in Fig. 9 nach rechts) vorgeschoben.

Um ein Werkzeug 100 zwischen den beiden Spindelwellen 322, 332 zu verspannen, wird das Axialdruckelement 375 zunächst gegenüber dem Basiselement 373 ganz zurückbewegt, indem die Druckschrauben so weit wie möglich in das Axialdruckelement 375 eingeschraubt werden. Nun wird die Spannmutter 372 auf die Zugstange 370 aufgeschraubt und mit Hilfe des aussenseitigen Sechskants am Basiselement 373 an die zweite Spindelwelle 332 angestellt. Dies erfolgt mit einem verhältnismässig geringen Drehmoment. Anschliessend wird mit Hilfe der Druckschrauben das ringförmige Axialdruckelement 375 kontrolliert so weit in Richtung der zweiten Spindelwelle 332 vorgeschoben, bis die gewünschte Spannkraft auf das Werkzeug 340 wirkt. Dabei liegt das Axialdruckelement 375 mit einer ringförmigen Auflagefläche an der zweiten Spindelwelle 332 an.

Selbstverständlich sind auch andere Konstruktionen einer Spannmutter einsetzbar, wie sie aus dem Stand der Technik an sich bekannt sind. Die Kraftübertragung kann z.B. auf eine andere Weise als dargestellt erfolgen. Insbesondere kann eine hydraulische Spannmutter eingesetzt werden.

Statt einer Spannmutter mit Innengewinde kann auch ein Spannelement eingesetzt werden, das auf eine andere Weise als über eine Schraubverbindung mit der Zugstange verbindbar ist, z.B. über ein Bajonett oder über eine Spannbuchse.

### Aufbau einer beispielhaften Werkzeugmaschine

In der Fig. 14 ist beispielhaft eine Werkzeugmaschine zur Hartfeinbearbeitung von Zahnrädern durch Wälzschleifen dargestellt. Die Maschine weist ein Maschinenbett 600 auf, auf dem ein Werkzeugträger 200 entlang einer horizontalen Zustellrichtung X verschiebbar angeordnet ist. Ein Z-Schlitten 210 ist entlang einer vertikalen Richtung Z verschiebbar am Werkzeugträger 200 angeordnet. Der Z-Schlitten 210 trägt einen Schwenkkörper 220, der gegenüber dem Z-Schlitten 210 um eine horizontale Schwenkachse A schwenkbar ist. Die Schwenkachse A verläuft parallel zur Zustellrichtung X. Auf dem Schwenkkörper 220 ist der nur symbolisch dargestellte Werkzeugkopf 300 angeordnet. Die Shiftrichtung Y des Werkzeugkopfs 300 verläuft senkrecht zur X-Achse und in einem um die A-Achse einstellbaren Winkel zur Z-Achse.

Auf dem Maschinenbett 600 ist ausserdem ein schwenkbarer Werkstückträger in Form eines Drehturms 400 angeordnet. Der Drehturm 400 ist um eine vertikale Schwenkachse C3 zwischen mehreren Drehstellungen verschwenkbar. Er trägt zwei Werkstückspindeln 500, auf denen jeweils ein Werkstück 510 aufspannbar ist. Jede der Werkstückspindeln 500 ist zu einer Drehung um eine Werkstückachse antreibbar. In der Fig. 12 ist die Werkstückachse der sichtbaren Werkstückspindel 500 mit C2 bezeichnet. Die Werkstückachse der in Fig. 12 nicht sichtbaren Werkstückspindel wird als C1-Achse bezeichnet. Die beiden Werkstückspindeln befinden sich auf dem Drehturm 400 in diametral gegenüberliegenden (d.h. bezüglich der Schwenkachse C3 um 180° versetzten) Positionen. Auf diese Weise kann eine der beiden Werkstückspindeln be- und entladen werden, während auf der anderen Werkstückspindel ein Werkstück bearbeitet wird. Dadurch werden unerwünschte Nebenzeiten weitgehend vermieden. Ein derartiges Maschinenkonzept ist z.B. aus WO 00/035621 A1 bekannt.

Die Maschine weist eine nur symbolisch dargestellte Maschinensteuerung 700 auf, welche mehrere Steuerungsmodule 710 sowie eine Bedientafel 720 umfasst. Jedes der Steuerungsmodule 710 steuert eine Maschinenachse an und/oder empfängt Signale von Sensoren.

### Abwandlungen

Die Schnittstelle zwischen den Spindelwellen 322, 332 und dem Bearbeitungswerkzeug 100 kann auch anders als in den vorstehend beschriebenen Ausführungsformen ausgebildet sein. Insbesondere kann eine andere Art von Konusverbindung zu Einsatz kommen. Dabei können beliebige bekannte Konus-Verbindungen eingesetzt werden, z.B. die in DIN ISO 666:2013-12 genannten Ausführungen A, BF, BM, CF oder CM. Für Details wird auf die DIN ISO 666:2013-12 sowie auf die darin genannten weiteren Normen DIN EN ISO 1119:2012-04, DIN ISO 702-1:2010-04, ISO 12164-1:2001-12 und ISO 12164-2:2001-12 verwiesen.

Statt wie vorstehend erläutert durch einen maschinenlesbaren Datenträger oder ergänzend dazu kann die Erkennung des Aufnahmeflansches bzw. des damit gebildeten Werkzeugs auch auf andere Weise erfolgen, z.B. durch eine mechanische Kodierung. Die Kodierung kann z.B. durch eine oder mehrere Kerben erfolgen, die eine eindeutige Identifikation zumindest des Typs des Aufnahmeflansches ermöglichen.

Die Zugstange 370 kann sich statt durch die zweite Spindelwelle 332 durch die erste Spindelwelle 322 hindurch erstrecken und an ihrem Ende mit der zweiten Spindelwelle 332 verbunden sein. Das Spannelement übt dann entsprechend eine Axialkraft auf die erste Spindelwelle in Richtung der zweiten Spindelwelle aus.

Um das Bearbeitungswerkzeug 100 axial zwischen der ersten Spindelwelle 322 und der zweiten Spindelwelle 332 zu verspannen, können statt einer zentralen Zugstange oder ergänzend dazu auch zwei oder mehr Zugstangen eingesetzt werden, die parallel zueinander und radial beabstandet zur Werkzeugspindelachse B verlaufen und in unterschiedlichen Winkelpositionen relativ zur Werkzeugspindelachse B angeordnet sind.

Die Fixierung und axiale Verspannung des Bearbeitungswerkzeugs 100 zwischen der ersten Spindelwelle und der zweiten Spindelwelle auf Druck kann auch auf eine andere Weise als mit einer durchgehenden Zugstange erfolgen, beispielsweise mit im Inneren der jeweiligen Spindelwelle angeordneten Spannsystemen. Dazu kann die Verbindung zwischen dem Bearbeitungswerkzeug und den Spindelwellen z.B. über Hohlschaftkegel (HSK) nach ISO 12164-1:2001-12 und ISO 12164-2:2001-12 erfolgen.

Der Werkzeugkörper kann anders ausgebildet sein als in den vorstehend erläuterten Ausführungsformen. Insbesondere kann der Werkzeugkörper auch mehrteilig sein.

Der Werkzeugkörper kann abrichtbar oder nicht abrichtbar sein. Ein nicht abrichtbarer Werkzeugkörper kann z.B. einen metallischen Grundkörper mit darauf angebrachtem Hartstoffbelag aufweisen. Ein solcher Werkzeugkörper kann grundsätzlich genauso wie ein abrichtbarer Werkzeugkörper auf dem Aufnahmeflansch montiert werden. Stattdessen ist es aber auch denkbar, ein einteiliges Werkzeug herzustellen, dessen Aussenkontur im Bereich der Verbindungsstellen mit den Werkzeugspindeln entsprechend den Flanschaufnahmen 111, 121 ausgebildet ist, wobei der Hartstoffbelag ein integraler Bestandteil dieses einteiligen Werkzeugs ist. Die Identifikation des Werkzeugs kann dann genauso wie vorstehend dargestellt beim Aufnahmeflansch mittels maschinenlesbarem Datenträger und/oder durch mechanische Kodierung erfolgen. Derartige einteilige Werkzeuge können Teil eines Werkzeugsortiments sein, das sowohl Werkzeuge mit dem vorstehend dargestellten Aufnahmeflansch als auch einteilige Werkzeuge umfasst.

### BEZUGSZEICHENLISTE

- 100: Schleifwerkzeug
- 101: Aufnahmeflansch
- 110: fester Flansch
- 111: erste Flanschaufnahme
- 112: äussere Mantelfläche
- 113: Bund
- 114: Spannfläche
- 115: Verbindungsbereich
- 116: zentrale Bohrung
- 117: Positionierbohrung
- 118: Aufnahmekerbe
- 119: Wuchtbohrung
- 120: Gegenflansch
- 121: zweite Flanschaufnahme
- 122: äussere Mantelfläche
- 123: Bund
- 124: Spannfläche
- 125: Zylinderschraube
- 126: zentrale Bohrung
- 127: Aussengewinde
- 130: Schleifscheibe
- 131, 132: Zwischenscheibe
- 140: Positionierring
- 141: Längsnut
- 142: Fixierstift
- 144: Spannfläche
- 145: Zwischenring
- 146: Einstellschraube
- 147: Einstellstift
- 148: Federelement
- 150: Konusverbindung
- 151: Innenkonus (Kegelaufnahme)
- 152: Aussenkonus (Kegel)
- 153: erste Plananlagefläche
- 154: zweite Plananlagefläche
- 200: Werkzeugträger
- 210: Z-Schlitten
- 220: Schwenkkörper
- 300: Werkzeugkopf
- 310: Basis
- 311: Linearführung
- 312: Kugelgewindetrieb
- 320: erste Spindeleinheit
- 321: erstes Spindelgehäuse
- 322: erste Spindelwelle
- 323: erstes Spindellager
- 324: Antriebsmotor
- 325: erste Spindelnase
- 326: Führungsschuh
- 330: zweite Spindeleinheit
- 321: zweites Spindelgehäuse
- 332: zweite Spindelwelle
- 333: zweites Spindellager
- 335: zweite Spindelnase
- 336: Führungsschuh
- 350: erste Wuchteinheit
- 360: zweite Wuchteinheit
- 370: Zugstange
- 372: Spannmutter
- 400: Drehturm
- 500: Werkstückspindel
- 510: Werkstück
- 600: Maschinenbett
- 700: Maschinensteuerung
- 710: Steuerungsmodul
- 720: Bedientafel
- X, Y, Z: Linearachse
- A: Schwenkachse
- B: Werkzeugachse
- C1, C2: Werkstückachse
- C3: Schwenkachse des Turms

## Patentansprüche

1. Aufnahmeflansch (101) für einen Werkzeugkörper (130), aufweisend:
einen festen Flansch (110), der eine Werkzeugachse (B) definiert, wobei der feste Flansch (110) dazu ausgebildet ist, den Werkzeugkörper (130) aufzunehmen, und wobei am festen Flansch (110) eine erste Flanschaufnahme (111) zur Verbindung mit einer um die Werkzeugachse (B) drehbaren ersten Spindelwelle (322) ausgebildet ist; und
einen Gegenflansch (120), der mit dem festen Flansch lösbar verbunden ist,
wobei der feste Flansch (110) und der Gegenflansch (120) über eine Konusverbindung (150) miteinander verbunden sind, wobei die Konusverbindung (150) koaxial zur Werkzeugachse (B) angeordnet ist und durch einen Innenkonus (151) und einen im Innenkonus (151) aufgenommenen Aussenkonus (152) gebildet wird,
**dadurch gekennzeichnet,**
**dass** benachbart zum Innenkonus (151) eine erste Plananlagefläche (153) ausgebildet ist und benachbart zum Aussenkonus (152) eine entgegengesetzt zur ersten Plananlagefläche (153) ausgerichtete zweite Plananlagefläche (154) ausgebildet ist,
**dass** die erste und zweite Plananlagefläche (153, 154) orthogonal zur Werkzeugachse verlaufen, und
**dass** der feste Flansch (110) und der Gegenflansch (120) an der ersten und zweiten Plananlagefläche (153, 154) reibschlüssig aneinander gepresst sind..

2. Aufnahmeflansch nach Anspruch 1, wobei am Gegenflansch (120) eine zweite Flanschaufnahme (121) zur Verbindung mit einer um die Werkzeugachse (B) drehbaren zweiten Spindelwelle (332) ausgebildet ist.

3. Aufnahmeflansch (101) nach Anspruch 1 oder2, wobei der Innenkonus (151) am festen Flansch (110) und der Aussenkonus (152) am Gegenflansch (120) ausgebildet ist, oder wobei der Innenkonus (151) am Gegenflansch (120) und der Aussenkonus (152) am festen Flansch (110) ausgebildet ist.

4. Aufnahmeflansch (101) nach einem der vorhergehenden Ansprüche, wobei die erste Plananlagefläche (153) in einem stirnseitig an den Innenkonus (151) angrenzenden Bereich angeordnet ist, und wobei die zweite Plananlagefläche (154) in einem den Aussenkonus (152) umgebenden Bereich angeordnet ist.

5. Aufnahmeflansch (101) nach einem der vorhergehenden Ansprüche, aufweisend eine Mehrzahl von axialen Schrauben (125), die den festen Flansch (110) und den Gegenflansch (120) an der Konusverbindung (150) axial aneinander pressen.

6. Aufnahmeflansch (101) nach einem der vorhergehenden Ansprüche, wobei der Aufnahmeflansch (101) eine erste und zweite Spannfläche (113, 143) definiert, so dass der Werkzeugkörper (130) zwischen der ersten und zweiten Spannfläche (113, 143) axial auf Druck einspannbar ist.

7. Aufnahmeflansch (101) nach Anspruch 6, aufweisend einen Positionierring (140), der relativ zum Gegenflansch (120) eine axial veränderbare Position hat, wobei die erste Spannfläche (113) am festen Flansch (110) ausgebildet ist, und wobei die zweite Spannfläche (143) am Positionierring (140) ausgebildet ist.

8. Aufnahmeflansch (101) nach Anspruch 7,
wobei der Gegenflansch (120) oder der feste Flansch (110) ein Aussengewinde (127) und der Positionierring (140) ein dazu komplementäres Innengewinde aufweisen, um die axiale Position des Positionierrings (140) durch eine Schraubbewegung des Positionierrings (140) relativ zum Gegenflansch (120) zu verändern, und
wobei der Aufnahmeflansch (101) optional einen Zwischenring (142) aufweist, der axial angrenzend an den Positionierring (140) angeordnet ist, um eine axiale Einspannkraft vom Positionierring (140) auf den Werkzeugkörper (130) zu übertragen.

9. Aufnahmeflansch (101) nach Anspruch 7, wobei der Positionierring (140) axial auf dem festen Flansch (110) und/oder auf dem Gegenflansch (120) verschiebbar ist, und wobei der Aufnahmeflansch (101) eine Mehrzahl von Gewindeelementen aufweist, die in den Gegenflansch (120) oder in den Positionierring (140) eingeschraubt sind, um die axiale Position des Positionierrings (140) relativ zum Gegenflansch (120) zu verändern.

10. Aufnahmeflansch nach einem der vorhergehenden Ansprüche, wobei die erste und/oder zweite Flanschaufnahme (111, 121) als Innen- oder Aussenkonus mit Plananlagefläche ausgebildet ist.

11. Aufnahmeflansch nach einem der vorhergehenden Ansprüche, aufweisend eine durchgehende axiale Bohrung (116, 126).

12. Bearbeitungswerkzeug (100), aufweisend:
einen Aufnahmeflansch (101) nach einem der vorhergehenden Ansprüche; und
einen Werkzeugkörper (130), insbesondere einen Schleifkörper, der auf dem Aufnahmeflansch (101) eingespannt ist.

13. Werkzeugkopf (300) für eine Werkzeugmaschine, insbesondere für eine Verzahnmaschine, aufweisend:
ein Bearbeitungswerkzeug (100) nach Anspruch 12,
eine erste Spindeleinheit (320) mit einer ersten Spindelwelle (322), die in der ersten Spindeleinheit (320) um die Werkzeugachse (B) drehbar gelagert ist; und
eine zweite Spindeleinheit (330) mit einer zweiten Spindelwelle (332), die in der zweiten Spindeleinheit (330) um die Werkzeugachse (B) drehbar gelagert ist,
wobei die erste Spindeleinheit (320) und die zweite Spindeleinheit (330) derart koaxial zueinander angeordnet sind, dass das Bearbeitungswerkzeug (100) axial zwischen der ersten Spindelwelle (322) und der zweiten Spindelwelle (332) aufgenommen ist.

14. Werkzeugkopf (300) nach Anspruch 13, wobei das Bearbeitungswerkzeug (100) axial zwischen der ersten Spindelwelle (322) und der zweiten Spindelwelle (332) verspannt ist, so dass beidseitig eine axiale Druckkraft auf das Bearbeitungswerkzeug (100) wirkt.

15. Werkzeugkopf (300) nach Anspruch 14,
wobei die zweite Spindelwelle (332) und das Bearbeitungswerkzeug (100) jeweils eine durchgehende axiale Bohrung aufweisen,
wobei der Werkzeugkopf (300) eine Zugstange (370) aufweist, die sich durch die axialen Bohrungen der zweiten Spindelwelle (332) und des Bearbeitungswerkzeugs (100) hindurch erstreckt, wobei die Zugstange (370) an einem Ende mit der ersten Spindelwelle (322) verbindbar ist, und
wobei die Zugstange (370) an einem zweiten Ende derart mit der zweiten Spindelwelle (332) verbindbar ist, dass zwischen der ersten Spindelwelle (322) und der zweiten Spindelwelle (332) eine axiale Druckkraft auf das Bearbeitungswerkzeug (100) erzeugbar ist.

## Claims

1. A hub flange (101) for a tool body (130), comprising:
a fixed flange (110) defining a tool axis (B), the fixed flange (110) being configured to receive the tool body (130), wherein a first flange socket (111) is formed on the fixed flange (110) for connection to a first spindle shaft (322) which is rotatable about the tool axis (B); and
a counterflange (120) which is detachably connected to the fixed flange,
wherein the fixed flange (110) and the counter flange (120) are connected to each other via a conical connection (150), the conical connection (150) being arranged coaxially with respect to the tool axis (B) and being formed by an inner cone (151) and an outer cone (152) received in the inner cone (151),
**characterized in**
**that** a first plane contact surface (153) is formed adjacent to the inner cone (151) and a second plane contact surface (154) oriented opposite the first plane contact surface (153) is formed adjacent to the outer cone (152),
**that** the first and second plane contact surfaces (153, 154) extend orthogonally to the tool axis, and
**that** the fixed flange (110) and the counterflange (120) are pressed together at the first and second plane contact surfaces (153, 154) so as to establish a friction fit.

2. The hub flange of claim 1, wherein a second flange socket (121) is formed on the counterflange (120) for connection to a second spindle shaft (332) which is rotatable about the tool axis (B).

3. The hub flange (101) of claim 1 or 2, wherein the inner cone (151) is formed on the fixed flange (110) and the outer cone (152) is formed on the counterflange (120), or wherein the inner cone (151) is formed on the counterflange (120) and the outer cone (152) is formed on the fixed flange (110).

4. The hub flange (101) of any one of the preceding claims, wherein the first plane contact surface (153) is arranged in a region adjacent to the inner cone (151) on the front side, and wherein the second plane contact surface (154) is arranged in a region surrounding the outer cone (152).

5. The hub flange (101) of any of the preceding claims, comprising a plurality of axial screws (125) axially pressing the fixed flange (110) and the counterflange (120) together at the conical connection (150).

6. The hub flange (101) of any of the preceding claims, wherein the hub flange (101) defines first and second clamping surfaces (113, 143) such that the tool body (130) is axially clampable between the first and second clamping surfaces (113, 143).

7. The hub flange (101) of claim 6, comprising a positioning ring (140) which has an axially variable position relative to the counterflange (120), wherein the first clamping surface (113) is configured on the fixed flange (110) and wherein the second clamping surface (143) is configured on the positioning ring (140).

8. The hub flange (101) of claim 7,
wherein the counterflange (120) or the fixed flange (110) has an external thread (127) and the positioning ring (140) has an internal thread complementary thereto, in order to change the axial position of the positioning ring (140) by a screwing movement of the positioning ring (140) relative to the counterflange (120), and
wherein the hub flange (101) optionally comprises an intermediate ring (142) disposed axially adjacent to the positioning ring (140) for transmitting an axial clamping force from the positioning ring (140) to the tool body (130).

9. The hub flange (101) of claim 7, wherein the positioning ring (140) is axially displaceable on the fixed flange (110) and/or on the counterflange (120), and wherein the hub flange (101) comprises a plurality of threaded elements that are screwed into the counterflange (120) or into the positioning ring (140) in order to change the axial position of the positioning ring (140) relative to the counterflange (120).

10. The hub flange of any one of the preceding claims, wherein the first and/or second flange sockets (111, 121) is formed as an inner or outer cone with a plane contact surface.

11. The hub flange of any one of the preceding claims, comprising an axial through bore (116, 126).

12. A machining tool (100) comprising:
a hub flange (101) according to any one of the preceding claims; and
a tool body (130), in particular a grinding body, which is clamped on the hub flange (101).

13. A tool head (300) for a machine tool, in particular for a gear cutting machine, comprising:
a machining tool (100) according to claim 12,
a first spindle unit (320) with a first spindle shaft (322) which is mounted in the first spindle unit (320) so as to be rotatable about the tool axis (B); and
a second spindle unit (330) with a second spindle shaft (332) which is mounted in the second spindle unit (330) so as to be rotatable about the tool axis (B),
wherein the first spindle unit (320) and the second spindle unit (330) are arranged coaxially with respect to each other in such a way the machining tool (100) is received axially between the first spindle shaft (322) and the second spindle shaft (332).

14. The tool head (300) of claim 13, wherein the machining tool (100) is axially clamped between the first spindle shaft (322) and the second spindle shaft (332) such that an axial compression force acts on both sides of the machining tool (100).

15. The tool head (300) of claim 14,
wherein the second spindle shaft (332) and the machining tool (100) each have an axial through bore,
wherein the tool head (300) comprises a pull rod (370) extending through the axial through bores of the second spindle shaft (332) and the machining tool (100), the pull rod (370) being connectable at one end to the first spindle shaft (322), and
wherein the pull rod (370) is connectable at a second end to the second spindle shaft (332) in such a way that an axial compression force can be generated on the machining tool (100) between the first spindle shaft (322) and the second spindle shaft (332).

## Revendications

1. Bride de réception (101) pour un corps d'outil (130), comprenant :
une bride fixe (110) qui définit un axe d'outil (B), la bride fixe (110) étant conçue pour recevoir le corps d'outil (130), et un premier logement de bride (111)étant formé sur la bride fixe (110) pour la liaison avec un premier arbre de broche (322) pouvant tourner autour de l'axe d'outil (B) ; et
une contre-bride (120) reliée de manière amovible à la bride fixe,
la bride fixe (110) et la contre-bride (120) étant reliées entre elles par une liaison conique (150), la liaison conique (150) étant disposée coaxialement à l'axe d'outil (B) et étant formée par un cône intérieur (151) et un cône extérieur (152) logé dans le cône intérieur (151),
**caractérisé en ce**
**qu'**une première surface d'appui plane (153) est formée à proximité du cône intérieur (151) et qu'une deuxième surface d'appui plane (154) orientée de manière opposée à la première surface d'appui plane (153) est formée à proximité du cône extérieur (152),
**que** les première et deuxième surfaces d'appui planes (153, 154) s'étendent orthogonalement à l'axe d'outil, et
**que** la bride fixe (110) et la contre-bride (120) sont pressées l'une contre l'autre par friction au niveau des première et deuxième surfaces d'appui planes (153, 154).

2. Bride de réception selon la revendication 1, dans laquelle un deuxième logement de bride (121) est formé sur la contre-bride (120) pour la liaison avec un deuxième arbre de broche (332) pouvant tourner autour de l'axe d'outil (B).

3. Bride de réception (101) selon la revendication 1 ou 2, dans laquelle le cône intérieur (151) est formé sur la bride fixe (110) et le cône extérieur (152) est formé sur la contre-bride (120), ou dans lequel le cône intérieur (151) est formé sur la contre-bride (120) et le cône extérieur (152) est formé sur la bride fixe (110).

4. Bride de réception (101) selon l'une quelconque des revendications précédentes, dans laquelle la première surface d'appui plane (153) est disposée dans une zone adjacente à l'avant du cône intérieur (151) et dans laquelle la deuxième surface d'appui plane (154) est disposée dans une zone entourant le cône extérieur (152).

5. Bride de réception (101) selon l'une quelconque des revendications précédentes, comportant une pluralité de vis axiales (125) qui pressent axialement la bride fixe (110) et la contre-bride (120) l'une contre l'autre au niveau de la liaison conique (150).

6. Bride de réception (101) selon l'une quelconque des revendications précédentes, la bride de fixation (101) définissant une première et une deuxième surfaces de serrage (113, 143) de telle sorte que le corps d'outil (130) puisse être serré axialement entre la première et la deuxième surfaces de serrage (113, 143).

7. Bride de réception (101) selon la revendication 6, comportant une bague de positionnement (140) qui a une position pouvant être modifiée axialement par rapport à la contre-bride (120), la première surface de serrage (113) étant formée sur la bride fixe (110) et la deuxième surface de serrage (143) étant formée sur la bague de positionnement (140).

8. Bride de réception (101) selon la revendication 7,
la contre-bride (120) ou la bride fixe (110) comportant un filetage extérieur (127) et la bague de positionnement (140) comportant un filetage intérieur complémentaire à celui-ci, afin de modifier la position axiale de la bague de positionnement (140) par un mouvement de vissage de la bague de positionnement (140) par rapport à la contre-bride (120), et
la bride de réception (101) comportant en option une bague intermédiaire (142) disposée axialement à proximité de la bague de positionnement (140) afin de transmettre une force de serrage axiale de la bague de positionnement (140) au corps d'outil (130).

9. Bride de réception (101) selon la revendication 7, dans laquelle la bague de positionnement (140) peut être déplacée axialement sur la bride fixe (110) et/ou sur la contre-bride (120), et dans laquelle la bride de réception (101) comporte une pluralité d'éléments filetés qui sont vissés dans la contre-bride (120) ou dans la bague de positionnement (140) afin de modifier la position axiale de la bague de positionnement (140) par rapport à la contre-bride (120).

10. Bride de réception selon l'une quelconque des revendications précédentes, dans laquelle le premier et/ou le deuxième logement de bride (111, 121) sont conçus comme un cône intérieur ou extérieur avec une surface d'appui plane.

11. Bride de réception selon l'une des revendications précédentes, comportant un alésage axial traversant (116, 126).

12. Outil d'usinage (100) comprenant :
une bride de réception (101) selon l'une des revendications précédentes ; et
un corps d'outil (130), en particulier un corps abrasif, qui est serré sur la bride de fixation (101).

13. Tête d'outil (300) pour une machine-outil, en particulier pour une machine à usiner des engrenages, comprenant :
un outil d'usinage (100) selon la revendication 12,
une première unité de broche (320) avec un premier arbre de broche (322) qui est monté dans la première unité de broche (320) de manière à pouvoir tourner autour de l'axe d'outil (B) ; et
une deuxième unité de broche (330) avec un deuxième arbre de broche (332) qui est monté dans la deuxième unité de broche (330) de manière à pouvoir tourner autour de l'axe d'outil (B),
la première unité de broche (320) et la deuxième unité de broche (330) étant disposées de manière coaxiale l'une par rapport à l'autre, de telle sorte que l'outil d'usinage (100) est logé axialement entre le premier arbre de broche (322) et le deuxième arbre de broche (332).

14. Tête d'outil (300) selon la revendication 13, dans laquelle l'outil d'usinage (100) est serré axialement entre le premier arbre de broche (322) et le deuxième arbre de broche (332), de sorte qu'une force de pression axiale agisse des deux côtés sur l'outil d'usinage (100).

15. Tête d'outil (300) selon la revendication 14,
dans laquelle le deuxième arbre de broche (332) et l'outil d'usinage (100) présentent chacun un alésage axial traversant,
la tête d'outil (300) comportant une tige de traction (370) qui s'étend à travers les alésages axiaux du deuxième arbre de broche (332) et de l'outil d'usinage (100), la tige de traction (370) pouvant être reliée à une extrémité au premier arbre de broche (322), et
la tige de traction (370) pouvant être reliée à une deuxième extrémité au deuxième arbre de broche (332) de telle sorte qu'une force de pression axiale puisse être générée sur l'outil d'usinage (100) entre le premier arbre de broche (322) et le deuxième arbre de broche (332).
